# EUROPÄISCHE PATENTANMELDUNG

(11) **EP 2 270 087 A1**
(43) Veröffentlichungstag der Anmeldung: **05.01.2011**
(21) Anmeldenummer: 09164218.1
(22) Anmeldetag: 30.06.2009
(51) Int. Cl.: C08K 5/00, C09D 5/14, C08K 5/3412, C08K 5/02, C08K 5/1515

(54) **Heterocyclische 3-Ringverbindungen und jodhaltige Verbindungen enthaltende Polymere**

(71) Anmelder: LANXESS Deutschland GmbH, 51369 Leverkusen (DE)
(72) Erfinder: Böttcher, Andreas Dr., 50859 Köln (DE)

(57) **Zusammenfassung**

Polymer, enthaltend wenigstens eine heterocyclische 3-Ring-Verbindung und eine jodhaltige Verbindung.

## Beschreibung

Die Erfindung betrifft Polymere, enthaltend heterocyclische 3-Ringverbindungen und jodhaltige Verbindungen, ihre Herstellung sowie diese enthaltende Polymerpräparationen und Bindemittelformulierungen und ihr Einsatz zum Schutz technischer Materialien

Iodhaltige Biozide werden zum Schutz technischer Materialien (z.B. Anstrichmittel) vor dem Befall, der Zersetzung, Zerstörung und optischen Veränderung durch Pilze, Bakterien und Algen, bevorzugt durch Pilze, eingesetzt. Darüber hinaus werden iodhaltige Biozide, auch in Kombination mit Bioziden anderer Wirkstoffklassen, als Komponenten biozid wirksamer Materialschutzmittel wie Holzschutzmittel eingesetzt. Neben Iodalkinylverbindungen werden hier auch Wirkstoffe eingesetzt, bei denen ein oder mehrere Iodatome an Doppelbindungssysteme, aber auch an einfach gebundene Kohlenstoffatome gebunden sind.

Vielen iodhaltigen Bioziden ist gemeinsam, dass sie unter Lichteinwirkung selbst in Substanz oder als Komponente eines technischen Materials (z.B. Anstrichmittel) zu einer Gelbfärbung unter Wirkstoffabbau führen. Dieses Merkmal erschwert bzw. verhindert den Einsatz von iodhaltigen Bioziden in entsprechend sensiblen Materialien, so z.B. in hellen bzw. weißen Anstrichmitteln.

Viele iodhaltige Biozide, insbesondere Iodalkinylverbindungen, werden durch Metallverbindungen besonders rasch zerstört. Diese Tatsache verhindert den Einsatz von z.B. Iodalkinylverbindungen in lösungsmittelbasierten Anstrichmitteln, wie z.B. Farben, Lacken und Lasuren, oder bioziden Schutzmitteln, wie z.B. Holzschutzgrundierungen, Holzschutzimprägnierungen und Holzschutzlasuren, da diese alkydbasierten Beschichtungs- und Schutzsysteme regelmäßig mit Metallverbindungen ausgerüstet sind. Hier fungieren Übergangsmetallverbindungen, z.B. Cobalt-, Blei-, Mangan- und Vanadiumoctoate, als Trockner (Sikkative) des alkydharzhaltigen Bindemittelsystems. Darüber hinaus werden auch Übergangsmetallverbindungen als Pigmente eingesetzt, die teilweise mit den Sikkativen vergleichbare destruktive Eigenschaften aufweisen.

Neben den Trocknern gibt es in den oben genannten lösungsmittelbasierten Systemen eine Reihe weiterer Bestandteile, die in unterschiedlicher Intensität zu einem Abbau iodhaltiger Biozide führen. Während bei den üblicherweise verwendeten Lösungsmitteln der destabilisierende Effekt noch relativ schwach ausgebildet ist, zeigen die anderen üblichen Komponenten einer Farbformulierung, wie z.B. Prozessadditive, Weichmacher, Farbpigmente, Antiabsetzmittel, Thixotropiermittel, Korrosionsinhibitoren, Hautverhinderer und Binder mehr oder weniger stark ausgeprägte destabilisierende Effekte.

Neben den oben beschriebenen lösungsmittelbasierten Systemen ist auch der Einsatz von iodhaltigen Bioziden in bestimmten wasserbasierten technischen Materialien (z.B. Anstrichmittel und Schutzmittel wie Holzschutzlasuren und Grundierungen) problematisch. Basiert z.B. die Filmbildung und Filmhärtung eines wasserbasierten Anstrichmittels auf der oxidativen Vernetzung wasserlöslicher bzw. emulgierter Alkydharze, so kommen auch in diesen Systemen Übergangsmetallverbindungen als Sikkative zum Einsatz, womit eine Zerstörung der enthaltenen iodhaltigen Biozide einhergeht.

Es sind bereits Methoden bekannt, den Abbau von Halogenpropargylverbindungen in übergangsmetallhaltigen, lösemittelbasierten Alkydharzfarben zu verhindern. So wird beispielsweise in der WO 98/22543 der Zusatz von Chelatisierungsreagenzien beschrieben.

Des Weiteren sind übergangsmetallhaltige, Lösemittel basierte Alkydharzfarben bekannt, bei denen Halogenpropargylverbindungen durch organische Epoxide stabilisiert werden (vgl. WO 00/16628).

Es sind auch bereits Verfahren beschrieben, den durch Licht induzierten Abbau von antifungischen Wirkstoffen, wie auch Iodpropargylbutylcarbamat, durch Zusatz von Tetraalkylpiperidinverbindungen und/oder UV-Absorbern zu unterdrücken. (vgl. EP-A 0083308).

Gemäß WO 2007/028527 werden iodhaltige Biozide mit 2-(2-Hydroxyphenyl)-benzotriazolen stabilisiert.

Durch Zusatz von Epoxyverbindungen soll die Verfärbung von Iodalkinverbindungen, wie IPBC reduziert werden (vgl. US-A 4,276,211 und US-A 4,297,258).

Des Weiteren sind noch synergistische Mischungen von Epoxiden mit UV Absorbern (vgl.WO 99/29176) und mit Benzyliden Campfer Derivaten (vgl. US-A 6,472,424) beschrieben, die ebenfalls eine reduzierte Gelbfärbung aufweisen.

Darüber hinaus wird in WO 2007/101549 die Stabilisierung iodhaltiger Biozide durch Azolverbindungen beschrieben.

Die stabilisierende Wirkung der oben genannten Stabilisatoren ist jedoch nicht immer ausreichend und mit anwendungstechnischen Nachteilen behaftet. So werden insbesondere die Trockenzeiten der Farben deutlich verlängert, was in vielen Fällen für den Anwender nicht akzeptabel ist. Außerdem ist die Inhibierung der Verfärbung nicht immer ausreichend.

Überraschenderweise wurde nun gefunden, dass jodhaltige Verbindungen, vorzugsweise jodhaltige Biozide in Polymeren, enthaltend jodhaltige Verbindungen und heterocyclische 3-Ringverbindungen, insbesondere Aziridine, insbesondere in Lösungsmittel- und Wasser basierten Systemen sowohl vor chemischem als auch Licht induziertem Abbau geschützt werden und damit die beschriebenen Nachteile nicht-stabilisierter jodhaltiger Verbindungen wie Farbveränderungen und Wirkstoff- bzw. Wirkungsverlust verhindert werden können. Darüber hinaus wurde gefunden, dass mit dem Einsatz von derartig ausgerüsteten Polymeren zur Stabilisierung jodhaltiger Biozide in den oben genannten Systemen keine anwendungstechnischen Nachteile, wie beispielsweise eine Verlängerung der Trockenzeit eines Anstrichsystems, einhergehen.

Durch den Einsatz von heterocyclische 3-Ringverbindungen, insbesondere Aziridine, enthaltende Polymere wird die Stabilität von jodhaltigen Verbindungen, die ebenfalls im Polymer enthalten sind noch weiter verbessert. Insbesondere besitzt diese Form gegenüber iodhaltigen Lösungen, selbst solchen, die bereits heterocyclische 3-Ringverbindungen enthalten Stabilitätsvorteile, insbesondere bei der Lagerung, vorzugsweise bei erhöhten Temperaturen.

Die Erfindung betrifft daher ein Polymer, enthaltend wenigstens eine heterocyclische 3-Ring-Verbindung und eine jodhaltige Verbindung.

Unter dem Begriff "enthaltend" kann im Hinblick auf die heterocylische 3-Ringverbindung sowohl "in der Polymermatrix eingelagert" als auch "adsorbtiv- oder kovalent am Polymer gebunden" verstanden werden.

Der Nachweis, dass eine heterocyclische 3-Ringverbindung in erfindungsgemäßer Weise in dem Polymer "enthaltend" ist, wird im Allgemeinen durch die analytische Feststellung der heterocyclischen 3-Ringgruppen, beispielsweise der Aziridingruppen, mittels geeigneter Methoden, bspw. Festkörper-NMR (MAS-NMR) geführt. Kann eine heterocyclische 3-Ringverbindung z.B. bei der MAS-NMR Bestimmung des erfindungsgemässen Polymers festgestellt werden, ist diese Bedingung im Sinne der vorliegenden Erfindung erfüllt.

Als heterocyclische 3-Ring-Verbindung kommen vorzugsweise solche mit 3-Ring-Funktion in Frage, die als Heteroatom im 3-Ring O, NR, S oder Se haben, wobei R für Wasserstoff oder einen organischen Rest steht. Bevorzugte heterocyclische 3-Ring-Verbindungen sind Epoxide oder Aziridine, insbesondere Aziridine.

Als Aziridine kommen solche in Frage, die eine oder mehrere Aziridin-Gruppen enthalten.

Bevorzugt sind bspw. Aziridinverbindungen der Formel (I) 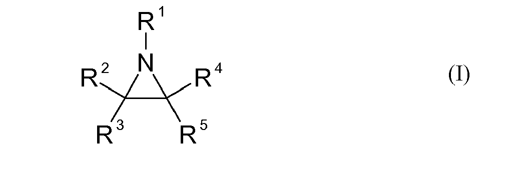 wobei
- R¹: Wasserstoff, Alkyl oder Cycloalkyl, die jeweils unsubstituiert oder substituiert und/oder einfach- oder mehrfach ethylenisch ungesättigt sind, jeweils substituiertes oder unsub- stituiertes Fullerenyl, Aryl, Alkoxy, Alkoxycarbonyl, Arylcarbonyl, Alkanoyl, Carbamoyl oder Oxomethylen bedeutet,
- R², R³, R⁴ und R⁵: unabhängig voneinander die gleiche Bedeutung wie R¹ haben und zusätzlich unabhängig Halogen, Hydroxyl, Carboxyl, Alkylsulfonyl, Arylsulfonyl, Nitril, Isonitril bedeuten oder die Reste
- R² und R⁴ oder R³ und R⁵: gemeinsam mit den Kohlenstoffatomen, an die sie gebunden sind, einen 5- bis 10 gliedrigen carbocyclischen Ring bilden, der unsubstituiert oder substituiert und/oder einfach- oder mehrfach ethylenisch ungesättigt ist.

Als monofunktionelle Aziridine der Formel (I) kommen bspw. solche in Frage, worin R² und R⁴ oder R³ und R⁵ gemeinsam mit den Kohlenstoffatomen, an die sie gebunden sind, einen 5- bis 10 0 gliedrigen carbocyclischen Ring bilden, der unsubstituiert oder substituiert und/oder einfach- oder mehrfach ethylenisch ungesättigt ist.

Insbesondere sind dies solche der Formel (II) 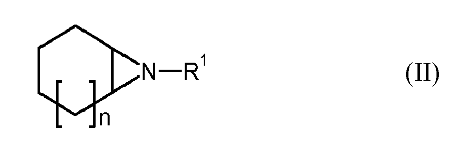 wobei der carbocyclische Ring unsubstituiert ist oder mit einem oder mehreren Substituenten ausgewählt aus der Reihe Halogen, Hydroxyl, Oxo, Carboxyl, Alkylsulfonyl, Arylsulfonyl, Nitril, Isonitril, Alkyl oder Cycloalkyl, die jeweils unsubstituiert oder substituiert und/oder einfach- oder mehrfach ethylenisch ungesättigt sind, substituiertes oder unsubstituiertes Fullerenyl, Aryl, Alkoxy, Alkoxycarbonyl oder Alkanoyl substituiert ist und
n für eine Zahl von 0 bis 6, bevorzugt 0 bis 1 steht.

Ebenfalls sind solche monofunktionelle Aziridinverbindungen der Formel (I) bevorzugt, worin R¹ für einen Rest der Formel 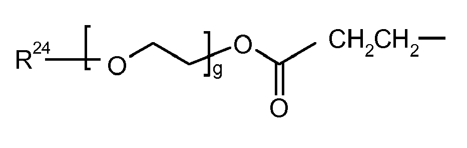 oder 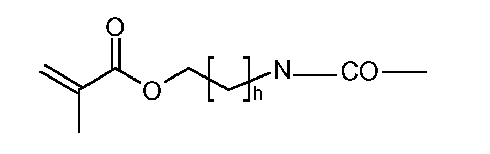 steht,
worin
R²⁴ für -H oder Alkyl, bevorzugt für -H, -CH₃, -C₂H₅, besonders bevorzugt für -CH₃, -C₂H₅ steht,
g eine Zahl von 1 bis 4, bevorzugt 1 bis 3, besonders bevorzugt 1 bis 2 ist,
h eine Zahl von 1 bis 11, bevorzugt 1 bis 5 und besonders bevorzugt 1 bis 3 ist und die übrigen Reste, die obige Bedeutung haben.

Insbesondere sind solche Verbindungen der Formel (I) bevorzugt, die der Verbindung der Formel (III) oder (IV) entsprechen. 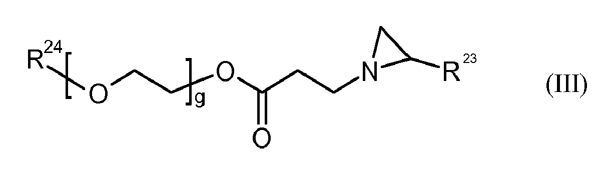 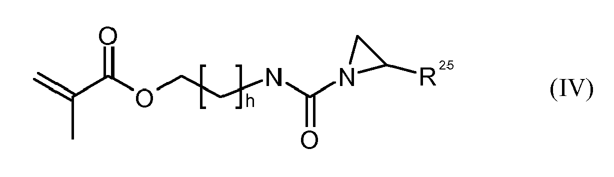 wobei
- R²³: für -H oder Alkyl, bevorzugt für -H oder -CH₃, besonders bevorzugt für -CH₃ steht,
- R²⁵: für -H oder Alkyl, bevorzugt für -H oder -CH₃, besonders bevorzugt für -CH₃ steht und die übrigen Reste die obige Bedeutung haben.

Besonders bevorzugt sind Aziridine, die zwei oder mehrere Aziridinfunktionen haben. Beispielsweise sind Verbindungen der Formel (V) zu nennen. 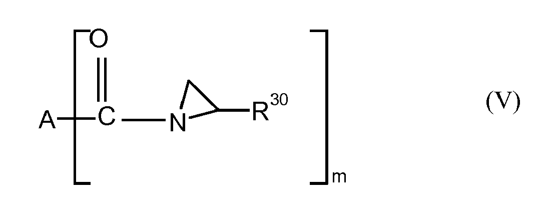 worin
- A: ein m-valenter aliphatischer, cycloaliphatischer oder aromatischer Rest bedeutet, der ggf. substituiert ist,
- m: für eine Zahl von 2 bis 5, insbesondere 2 bis 3 steht, und
- R³⁰: für jede m-Einheit jeweils unabhängig für Wasserstoff oder C₁-C₄-Alkyl, insbesondere CH₃ oder CH₂CH₃ steht.
Bei m = 2 steht A bevorzugt für C₂-C₁₀-Alkylen, insbesondere für
-(CH₂)₆)-, -C(CH₃)₂ CH₂ C(CH₃)₂ CH₂- oder - C(CH₃)₂ CH₂ CH(CH₃) CH₂ - oder
für ein Phenylen, insbesondere für den bivalenten Rest der Formel 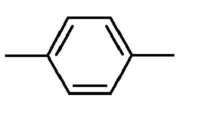 Bei m = 3 steht A bevorzugt für den trivalenten Rest der Formel

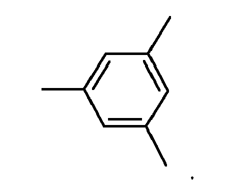

Bevorzugt sind solche Verbindungen der Formel (V), die den Formeln (Va) - (Vd) entsprechen. 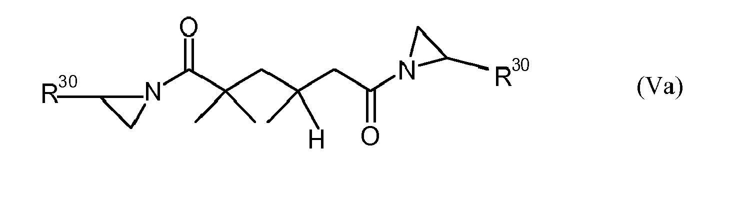 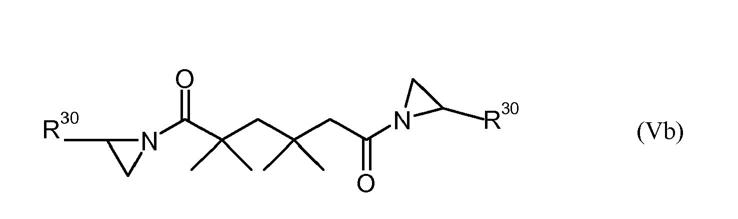 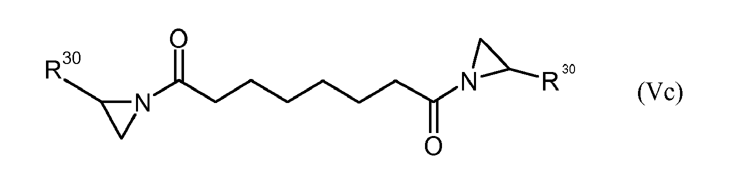 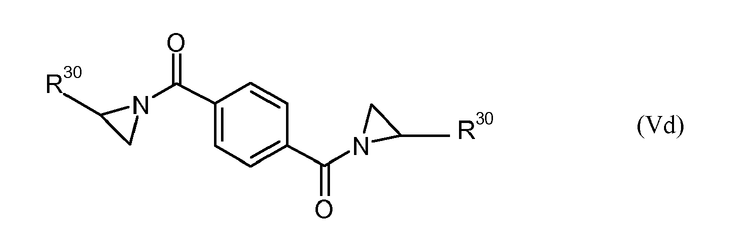 Ebenfalls bevorzugt sind als polyfunktionelle Aziridinverbindungen Michael-Additionsprodukte von gegebenenfalls substituiertem Ethylenimin an Ester von mehrwertigen Alkoholen mit a,β-ungesättigten Carbonsäuren und den Additionsprodukten von gegebenenfalls substituiertem Ethylenimin an Polyisocyanate.

Geeignete Alkoholkomponenten sind beispw. Trimethylolpropan, Neopentylglykol, Glycerin, Pentaerythrit, 4,4'-Isopropylidendiphenol, 4,4'-Methylendiphenol und Polyvinylalkohole. Als α,β-ungesättigte Carbonsäuren kommen bspw. Acryl- und Methacrylsäure, Crotonsäure und Zimtsäure in Frage. Besonders bevorzugt ist Acrylsäure. Die korrespondierenden mehrwertigen Alkohole der α,β-ungesättigten Carbonsäureester können ggf. Alkohole sein, die an ihren OH-Funktionen teilweise vollständig mit Alkylenoxiden einfach oder mehrfach verlängert sind. Hierbei kann es sich bspw. um die mit Alkylenoxiden einfach oder mehrfach verlängerten oben genannten Alkohole handeln. Diesbezüglich wird auch auf die US 4,605,698 verwiesen, dessen Offenbarung durch Bezugnahme in die vorliegende Erfindung eingeschlossen ist. Erfindungsgemäß besonders geeignete Alkylenoxide sind Ethylenoxid und Propylenoxid.

Beispiele für zur Reaktion mit gegebenenfalls substituiertem Ethylenimin geeigneten Polyisocyanaten sind die auf S. 4, Zeile 33 - 35 von WO2004/05061 genannten.

Beispiele für erfindungsgemäß geeignete Aziridine sind die auf S. 3, Zeile 29 - 34 von WO2004/05061 genannten.

Bevorzugt sind ebenfalls solche Aziridine wie sie beispielsweise in US 3,225,013 (Fram), US 4,490,505 (Pendergrass) und US 5,534,391 (Wang) beschrieben sind.

Ebenfalls bevorzugt sind solche Aziridine der Formel (I), die wenigsten drei Aziridingruppen besitzen, wie beispielsweise Trimethylolpropan-tris[3-(1-aziridinyl)propionat], Trimethylolpropantris[3-(2-methyl-1-aziridinyl)propionat], Trimethylolpropan-tris[2-aziridinylbutyrat], Tris(1-aziridinyl)phosphinoxid, Tris(2-methyl-1-aziridinyl)phosphinoxid, Pentaerythritol-tris-[3-(1-aziridinyl)propionat] und Pentaerythritol-tetrakis-[3-(1-aziridinyl)propionat].

Hiervon sind besonders Trimethylolpropan-tris[3-(1-aziridinyl)propionat], Trimethylolpropan-tris[3-(2-methyl-1-aziridinyl)propionat], Trimethylolpropan-tris[2-aziridinylbutyrat], Pentaerythritol-tris-[3-(1-aziridinyl)propionat] und Pentaerythritol-tetrakis-[3-(1-aziridinyl)propionat] bevorzugt.

Besonders sind Trimethylolpropan-tris[3-(1-aziridinyl)propionat], Trimethylolpropan-tris[3-(2-methyl-1-aziridinyl)propionat] und Pentaerythritol-tetrakis-[3-(1-aziridinyl)propionat] bevorzugt.

Ebenfalls bevorzugt sind polyfunktionelle Aziridine der Formel (VI) 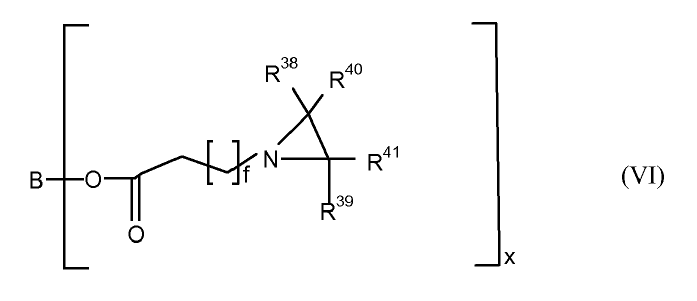 worin
- B: der Rest eines aliphatischen Polyols ist, das wenigstens x OH-Funktionen aufweist, wobei x OH-Funktionen durch den Rest der obigen Klammer substituiert sind,
- f: für eine Zahl von 0 bis 6, insbesondere von 1 bis 3 steht,
- x: eine Zahl größer oder gleich 2 ist, insbesondere für 2 bis 500.000 steht und

R³⁸,R³¹, R⁴⁰ und R⁴¹ die identische Bedeutung wie die Reste R² - R⁵ in der Formel (I) haben.

Besonders bevorzugt sind solche Aziridine der Formel (VI), worin x für 3 oder 4 steht und B ein 3-oder 4-fach OH-funktionelles Polyol ist.

Besonders bevorzugt sind Aziridine der Formel (VI), die der Formel (VIa) - (VIc) entsprechen 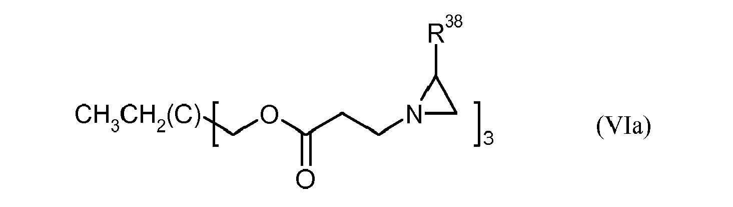 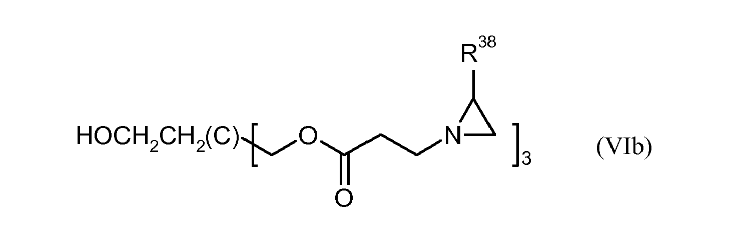 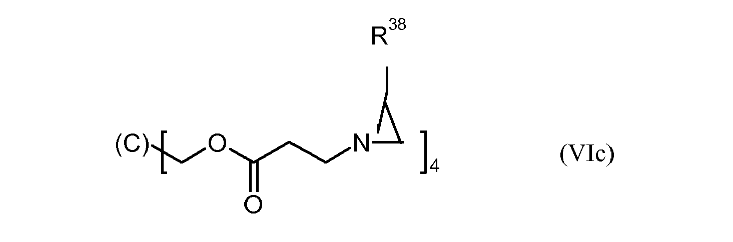 worin

R³⁸ für Wasserstoff oder CH₃ steht.

Besonders bevorzugt ist die auch als Crosslinker CX-100 von DSM bekannte Aziridinverbindung der Formel (VIa), mit R³⁸ = Methyl sowie auch das Produkt "Corial Härter AN" der BASF, das das Aziridin der Formel (VIa) mit R³⁸ = Wasserstoff enthält.

Als Epxoide kommen alle Verbindungen in Frage, die eine oder mehrere Oxiran-Ringe enthalten.

Bevorzugt sind bspw. Epoxide der allgemeinen Formel (VII): 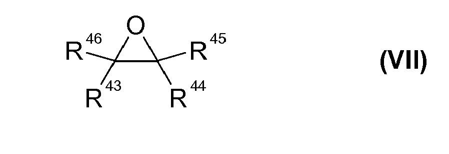 worin
R⁴³, R⁴⁴, R⁴⁵ und R⁴⁶ unabhängig voneinander Wasserstoff, Alkyl oder Cycloalkyl, die jeweils unsubstituiert oder substituiert und/oder einfach- oder mehrfach ethylenisch ungesättigt sind, jeweils substituiertes oder unsubstituiertes Fullerenyl, Aryl, Alkoxy, Aryloxy, Alkanoyl, Alkoxycarbonyl, Arylcarbonyl, Alkanoyl, Carbamoyl oder Oxomethylen, Halogen, Hydroxyl, Carboxyl, Alkylsulfonyl, Arylsulfonyl, Nitril, Isonitril, bedeuten
oder die Reste
R⁴³ und R⁴⁴ oder R⁴⁵ und R⁴⁶ gemeinsam mit den Kohlenstoffatomen, an die sie gebunden sind, einen 5- bis 10 gliedrigen carbocyclischen Ring bilden, der unsubstituiert oder substituiert und/oder einfach- oder mehrfach ethylenisch ungesättigt ist.

Bevorzugtes "Alkyl" ist ein lineares oder verzweigtes Alkylradikal mit 1 bis 20, bevorzugt 1 bis 12 Kohlenstoffatomen. Beispiele für erfindungsgemäße Alkylreste sind Methyl, Ethyl, n-Propyl, Isopropyl, n-Butyl, Isobutyl, sec-Butyl, tert-Butyl, Pentyl, iso-Amyl, Hexyl, Octyl usw. Die vorgenannten Alkylradikale können bevorzugt durch folgende Reste substituiert sein; Alkoxy, bevorzugt C₁-C₁₂-Alkoxy, Nitro, Monoalkylamino, bevorzugt C₁-C₁₂-Monoalkylamino, Dialkylamino, bevorzugt Di[C₁-C₁₂-]alkylamino, Cyano, Halo, Haloalkyl, bevorzugt Trifluoromethyl, Alkanoyl, Aminocarbonyl, Monoalkylaminocarbonyl, Dialkylaminocarbonyl, Alkylamido, bevorzugt C₁-C₁₂-Alkylamido, Alkoxycarbonyl, bevorzugt C₁-C₁₂- Alkoxycarbonyl, Alkylcarbonyloxy, bevorzugt C₁-C₁₂-Alkylcarbonyloxy, Aryl, bevorzugt Phenyl oder durch Halogen, C₁-C₁₂-Alkyl oder C₁-C₁₂-Alkoxy substituiertes Aryl, heterocyclische 3-Ringgruppen, insbesondere Aziridin- oder Epxoygruppen, oder Substituenten, wie die oben genannten, die diese Gruppen enthalten.

Bevorzugt stehen die Reste R⁴³, R⁴⁴, R⁴⁵ und R⁴⁶ jeweils unabhängig für Wasserstoff oder Aralkyl, Aryloxyalkyl, Alkoxyalkyl wie Epoxy-di-alkoxyalkyl bspw. 2,3-Epoxy-1-propoxyethoxymethyl, 2,3-Epoxy-1-butoxyethoxyethyl oder 3,4-Epoxy-1-butoxyethoxyethyl, für den Rest der Formel 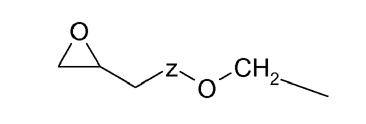 oder 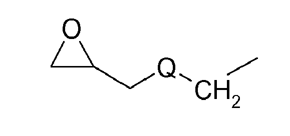 wobei
Z für unverzweigtes oder verzweigtes C₁-C₁₀-Alkylen, insbesondere Propylen, Butylen, Pentylen, Hexylen, oder Heptylene, halogeniertes unverzweigtes oder verzweigtes C₁-C₁₀-Alkylen wie bspw. 2,2-Dichloromethylpropylen steht
und
Q für C₁-C₄-Alkylen, Carbonylarylcarboxy wie bspw. Carbonylphenylcarboxy steht.
Zu den bevorzugten Epoxiden zählen die Verbindungen, in denen
R⁴⁶ für Wasserstoff, Alkoxy, Alkyl oder 2,3-Epoxy-1-propoxyethoxymethyl,
R⁴³ für Wasserstoff oder Alkyl und
R⁴⁴ und R⁴⁵ für Wasserstoff steht,
und zusätzlich R⁴³ und R⁴⁴ oder R⁴⁵ und R⁴⁶ gemeinsam mit den Kohlenstoffatomen, an die sie gebunden sind, einen 5- bis 10 gliedrigen carbocyclischen Ring bilden, der unsubstituiert oder substituiert und/oder einfach- oder mehrfach ethylenisch ungesättigt ist.

Zu den besonders bevorzugten Epoxiden gehören Glycidylether. Diese Verbindungen sind dadurch gekennzeichnet, dass sie einen oder mehrere 2,3-Epoxypropanoxy-Gruppen enthalten und durch die allgemeine Formel (VIII) wiedergegeben werden können: 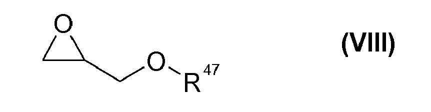 wobei
R⁴⁷ die gleiche Bedeutung wie R⁴³ R⁴⁴, R⁴⁵ oder R⁴⁶ hat.

Viele dieser Glycidylether sind kommerziell erhältlich. Grundsätzlich sind alle Glycidylether geeignet, insbeondere solche, die durch Reaktion von 1-Chloro-2,3-epoxypropan mit Alkoholen, bzw. durch Reaktion von Glycidylalkohol mit geeigneten Elektrophilen, z.B. Halogeniden, herstellbar sind.

Besonders bevorzugt sind auch Epoxid-haltige Produkte, erhältlich durch Umsetzung von Epichlorhydrin (1-Chloro-2,3-epoxypropan) mit mehrwertigen Alkoholen, insbesonderemehrwertigen Phenolen wie bsw. Bisphenol A einschließlich oligomerer und polymerer Reaktionsprodukte. Besonders bevorzugt sind solche mit einem mittleren Molgewicht von kleiner 2000 g/mol, insbesondere kleiner 1000 g/mol.

Zu den bevorzugten Epoxiden gehören auch die folgenden Verbindungen: 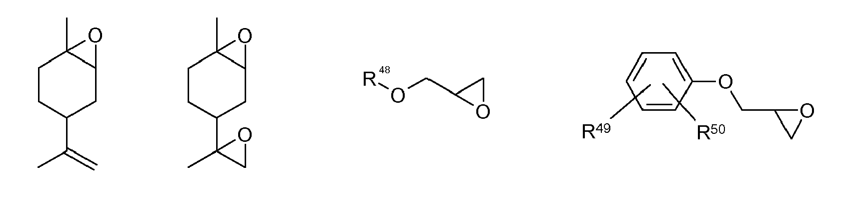 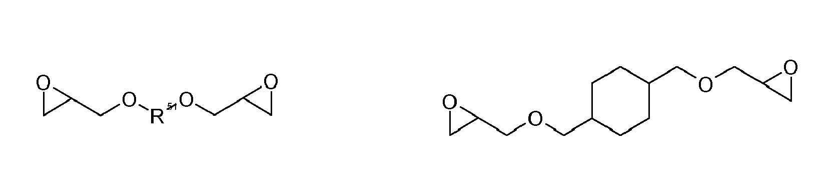 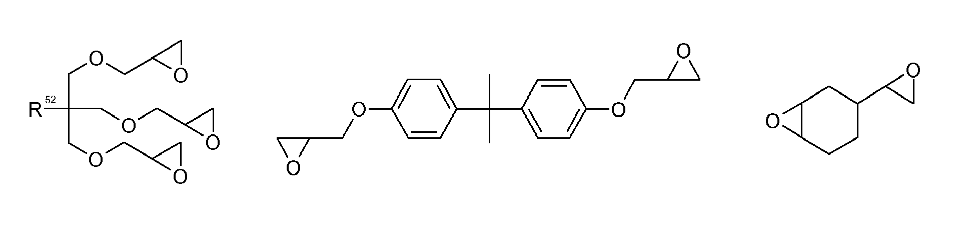 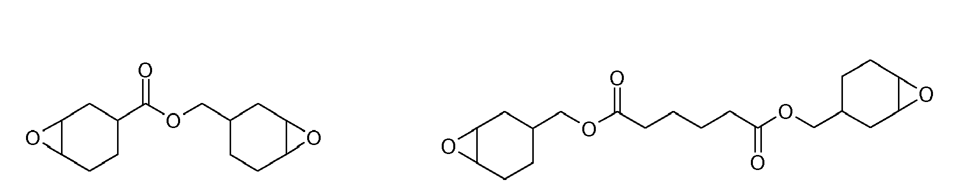 wobei
R⁴⁸ C₁-C₂₀-Alkyl
R⁴⁹ H, Alkyl, substituiertes Alkyl,
R⁵⁰ Halogen,
R⁵¹ C₁-C₂₀-Alkyl und
R⁵² H, C₁-C₂₀-Alkyl, bevorzugt Methyl oder Ethyl
bedeuten.

Als iodhaltige Verbindungen kommen vorzugsweise Iodalkinyl-Verbindungen oder Verbindungen in Frage, bei denen ein oder mehrere Iodatome an Doppelbindungen gebunden sind oder bei denen ein oder mehrere Iodatome an einfachgebundene Kohlenstoffatome gebunden sind.

Bei den iodhaltigen Verbindungen, insbesondere Bioziden handelt es sich beispielsweise um Diiodmethyl-p-tolylsulfon, Diiodmethyl-p-chlorphenylsulfon, 3-Brom-2,3-düod-2-propenyl-alkohol, 2,3,3-Triiodallylalkohol, 4-Chlor-2-(2-chlor-2-methylpropyl)-5-[(6-iod-3-pyridinyl)-methoxy]-3(2H)- pyridazinone (CAS-RN: 120955-77-3) Iodfenfos, 3-Iod-2-propinyl-2,4,5-trichlorphenylether, 3-Iod-2-propinyl-4-chlorphenylformal (IPCF), N-Iodpropargyloxycarbonyl-alanin, N-Iodpropargyloxycarbonyl-alanin-ethylester, 3-(3-Iodpropargyl)-benzoxazol-2-on, 3-(3-Iodpropargyl)-6-chlorbenzoxazol-2-on, 3-Iod-2-propinyl-alkohol, 4-Chlorphenyl-3-iodpropargylformal,3-Iod-2-propinyl-propyl-carbamat, 3-Iod-2-propinyl-butyl-carbamat (IPBC), 3-Iod-2-propinyl-m-chlorphenyl-carbamat, 3-Iod-2-propinyl-phenyl-carbamat, Di-(3-Iod-2-propinyl)hexyl-dicarbamat, 3-Iod-2-propinyloxyethanol-ethylcarbamat, 3-Iod-2-propinyl-oxyethanol-phenyl-carbamat, 3-Iod-2-propinyl-thioxo-thioethylcarbamat, 3-Iod-2-propinyl-carbaminsäureester (IPC), 3-Brom-2,3-düod-2-propenylethylcarbamat, 3-Iod-2-propinyl-n-hexylcarbamat oder 3-Iod-2-propinyl-cyclohexylcarbamat.

Bevorzugt handelt es sich bei den iodhaltigen Verbindungen, insbesondere Bioziden um 3-Iod-2-propinyl-2,4,5-trichlorphenylether, 3-Iod-2-propinyl-4-chlorphenylformal (IPCF), N-Iodpropargyloxycarbonyl-**alanin**, N-Iodpropargyloxycarbonyl-alanin-ethylester, 3-(3-Iodpropargyl)-benzoxazol-2-on, 3-(3-Iodpropargyl)-6-chlorbenzoxazol-2-on, 3-Iod-2-propinyl-alkohol, 4-Chlorphenyl-3-iodpropargylformal, 3-Iod-2-propinyl-propyl-carbamat, 3-Iod-2-propinyl-butyl-carbamat (IPBC), 3-Iod-2-propinyl-m-chlorphenyl-carbamat, 3-Iod-2-propinyl-phenyl-carbamat, Di-(3-Iod-2-propinyl)hexyl-dicarbamat, 3-Iod-2-propinyloxyethanol-ethylcarbamat, 3-Iod-2-propinyl-oxyethanol-phenyl-carbamat, 3-Iod-2-propinyl-thioxo-thioethylcarbamat, 3-Iod-2-propinyl-carbaminsäureester (IPC), 3-Brom-2,3-diiod-2-propenylethylcarbamat, 3-Iod-2-propinyl-n-hexylcarbamat oder 3-Iod-2-propinyl-cyclohexylcarbamat.

Besonders bevorzugt handelt es sich bei den iodhaltigen Verbindungen, insbesondere Bioziden um 3-Iod-2-propinyl-propyl-carbamat, 3-Iod-2-propinyl-butyl-carbamat (IPBC), 3-Iod-2-propinyl-m-chlorphenyl-carbamat, 3-Iod-2-propinyl-phenyl-carbamat, Di-(3-Iod-2-propinyl)hexyl-dicarbamat, 3-Iod-2-propinyloxyethanol-ethylcarbamat, 3-Iod-2-propinyl-oxyethanol-phenyl-carbamat, 3-Iod-2-propinyl-thioxo-thioethylcarbamat, 3-Iod-2-propinyl-carbaminsäureester (IPC), 3-Brom-2,3-diiod-2-propenylethylcarbamat, 3-Iod-2-propinyl-n-hexylcarbamat oder 3-Iod-2-propinyl-cyclohexylcarbamat.

Darüber hinaus handelt es sich bei den besonders bevorzugten, iodhaltigen Verbindungen, insbesondere Bioziden um N-Alkyl-Iodtetrazole, N-Aryl-Iodterazole und N-Aralkyl-Iodterazole, wie sie bspw. in (EP1773125) beschrieben sind.

Die iodhaltigen Verbindungen, insbesondere Biozide können einzeln oder in Mischungen zusammen mit mehreren iodhaltigen Verbindungen, insbesondere Bioziden eingesetzt werden. Besonders bevorzugt ist IPBC.

Bevorzugte Polymere sind natürliche Polymere, bspw. Cellulose, Proteine, Polyprene oder Lignin,halbsynthetische Polymere wie bspw. Celluloseacetat, Celluloseether, Cellulosenitrat, vernetztes Casein oder Carboxymethylcellulose und/oder synthetische Polymere, insbesondere solche auf Basis von ethylenisch ungesättigten Monomeren wie bspw. Polyvinylchlorid, Polyethylen (HDPE, LDPE, VLDPE), Polypropylen, Polystyrol, modifizierte Polystyrole wie SAN, ABS, Polyacrylate oder deren Copolymerisate, Polyester wie bspw. Polyethylenterephthalat, Polybutylenterephthalat oder ungesättigte Polyesterharze, sowie Polyurethane, Polyamide, Polyharnstoffe, Polycarbonate, Polyalkylenglykole, Polyimide, Polyimine, Alkydharze, Phenolharze, Aminoharze oder Epoxyharze. Die genannten Polymere können auch als Blends oder soweit möglich auch als Copolymere zum Einsatz kommen.

Besonders bevorzugt sind Polymere auf Basis von ethylenisch ungesättigten Monomeren. Bevorzugt ist ein Polymer, das dadurch gekennzeichnet ist, dass das Polymer aus ethylenisch ungesättigten Monomeren M aufgebaut ist, umfassend:
- wenigstens 30 Gew.-%, insbesondere wenigstens 40 Gew.-%, besonders bevorzugt wenigstens 50 Gew.-%, bezogen auf die Gesamtmenge der Monomere M, wenigstens eines neutralen, monoethylenisch ungesättigten Monomeren M¹ mit einer Wasserlöslichkeit von nicht mehr als 50 g/l bei 25 °C, vorzugsweise nicht mehr als 30 g/l bei 25 °C,
- bis zu 60 Gew.-%, insbesondere von 0,01 bis 50 Gew.-%, bezogen auf die Gesamtmenge der Monomere M, eines oder mehrerer von den Monomeren M¹ verschiedener mehrfach ethylenisch ungesättigter Monomere M² und
- bis zu 40 Gew.-%, insbesondere bis zu 0,01 bis 40 Gew.-%, bezogen auf die Gesamtmenge der Monomere M, eines oder mehrerer von den Monomeren M¹ und M² verschiedener Monomere M³, die ladungstragend oder, potentiell ladungstragend sind oder neutral und vorzugsweise nicht potentiell ladungstragend sind, mit einer Wasserlöslichkeit von mehr als 50 g/l bei 25 °C.

Besonders bevorzugt sind Polymere, wobei Anteile der verwendeten Monomere M¹, M² und M³ 100% betragen.

Besonders bevorzugt ist ein Polymer, das aus ethylenisch ungesättigten Monomeren M aufgebaut ist, worin die Monomere M wenigstens ein Monomer M³ in einer Menge von 0,01 bis 40 Gew.-%, insbesondere 0,1 bis 30 Gew.-% , bezogen auf die Gesamtmenge der Monomeren M beträgt, das ausgewählt ist unter
- monoethylenisch ungesättigten Monomeren M^{3a}, die wenigsten eine anionische Gruppe aufweisen,
- monoethylenisch ungesättigten, neutralen Monomeren M^{3b}, die eine Wasserlöslichkeit von wenigstens 50 g/l bei 25 °C aufweisen, und
- monoethylenisch ungesättigten Monomeren M^{3c}, die wenigstens eine kationische Gruppe und/oder wenigstens eine im wässrigen protonierbare Gruppe aufweisen.

Bevorzugt enthalten die Monomere M wenigstens ein Monomer M^{3a}.

Bevorzugt ist das erfindungsgemäße Polymer zu wenigstens 30 Gew.-%, bezogen auf die Gesamtmenge der das Polymer bildenden Monomere M, vorzugsweise zu 40 bis 99,5 Gew.-% und besonders bevorzugt 50 bis 98 Gew.-% aus neutralen, monoethylenisch ungesättigten Monomeren M¹ mit einer Wasserlöslichkeit von nicht mehr als 30g/l bei 25 °C, insbesondere bei 1013 mbar aufgebaut. Insbesondere liegt die Wasserlöslichkeit der Monomere M¹ unter diesen Bedingungen bei höchstens 20 g/l. Geeignete Monomere M¹ umfassen vinylaromatische Monomere wie Styrol, Ester monoethylenisch ungesättigter Mono-und Dicarbonsäuren mit 3 bis 8 und insbesondere 3 oder 4 C-Atomen mit C₁-C₂₀-Alkanolen oder mit C₅-C₈-Cycloalkanolen, insbesondere die Ester der Acrylsäure, der Methacrylsäure, der Crotonsäure, die Diester der Maleinsäure, der Fumarsäure und der Itaconsäure und besonders bevorzugt die Ester der Acrylsäure mit C₁-C₁₈-Alkanolen (= C₁-C₁₈-Alkylacrylate) wie Ethylacrylat, n-Butylacrylat, Isobutylacrylat, tert.-Butylacrylat, n-Hexylacrylat, 2-Ethylhexylacrylat, 3-Propylheptylacrylat und Stearylacrylat sowie die Ester der Methacrylsäure mit C₁-C₁₈-Alkanolen wie Methylmethacrylat, Ethylmethacrylat, n-Butylmethacrylat, Isobutylmethacrylat, tert.-Butylmethacrylat, n-Hexylmethacrylat, Stearylmethacrylat und dergleichen. Geeignete Monomere M¹ sind ausserdem Vinyl- und Allylester aliphatischer Carbonsäuren mit 1 bis 20 C-Atomen, beispielsweise Vinylacetat, Vinylpropionat sowie die Vinylester der Versatic^{®}-Säuren (Vinylversatate), Vinylhalogenide wie Vinylchlorid und Vinylidenchlorid, konjugierte Diolefine wie Butadien und Isopren sowie C₂-C₆-Olefine wie Ethylen, Propen, 1-Buten und n-Hexen. Bevorzugte Monomere M¹ sind vinylaromatische Monomere, insbesondere Styrol, C₁-C₂₀-Alkylacrylate, insbesondere C₁-C₁₈-Alkylacrylate und C₁-C₁₈-Alkylmethacrylate.

Bevorzugte ethylenisch ungesättigte Monomere M umfassen außerdem 0,1 bis 60 Gew.-%, insbesondere 0,5 bis 50 Gew.-% wenigstens eines ethylenisch mehrfach ungesättigten Monomere M².

Zu den Monomeren M² zählen insbesondere Divinylbenzol, Acrylate und Methacrylate zwei- und mehrwertiger Alkohole wie bspw. Butandiol, Pentaerythritol und Glycerin.

Bevorzugte ethylenisch ungesättigte Monomere M sind außerdem wenigstens 0,01 bis 40 Gew.-%, insbesondere 0,1 bis 30 Gew.-% wenigstens eines von den Monomeren M¹ und M² verschiedenen ethylenisch ungesättigten Monomere M³.

Zu den Monomeren M³ zählen insbesondere monoethylenisch ungesättigte Monomere M^{3a}, die wenigstens eine anionische Gruppe aufweisen, insbesondere Monomere M^{3a}, die wenigstens eine Säuregruppe, vorzugsweise wenigstens eine Sulfonsäuregruppe, eine Phosphonsäuregruppe oder ein oder zwei Carbonsäuregruppen aufweisen, sowie die Salze der Monomere M^{3a}, insbesondere die Alkalimetallsalze, z. B. die Natrium-oder Kallumsalze sowie die Ammoniumsalze. Hierzu zählen ethylenisch ungesättigte Sulfonsäuren, insbesondere Vinylsulfonsäure, 2-Acrylamido-2-methylpropansulfonsäure, 2-Acryloxyethansulfonsäure und 2-Methacryloxyethansulfonsäure, 3-Acryloxy-und 3-Methacryloxypropansulfonsäure, Vinylbenzolsulfonsäure und deren Salze, ethylenisch ungesättigte Phosphonsäuren, wie Vinylphosphonsäure und Vinylphosphonsäuredimethylester und deren Salze und α,β-ethylenisch ungesättigte C₃-C₈-Mono-und C₄-C₈-Dicarbonsäuren, insbesondere Acrylsäure, Methacrylsäure, Crotonsäure, Maleinsäure, Fumarsäure und Itaconsäure. Der Anteil der Monomere M^{3a} ist vorzugsweise nicht größer als 35 Gew.-%, vorzugsweise nicht größer als 20 Gew.-%, z. B. 0,1 bis 20 Gew.-% und insbesondere 0,5 bis 15 Gew.-%, bezogen auf die Gesamtmenge der Monomere M.

Zu den Monomeren M³ zählen weiterhin die monoethylenisch ungesättigten, neutralen Monomere M^{3b}, die eine Wasserlöslichkeit von wenigstens 50 g/l bei 25 °C, insbesondere wenigstens 100 g/l bei 25 °C aufweisen. Beispiele hierfür sind die Amide der vorgenannten ethylenisch ungesättigten Carbonsäuren, insbesondere Acrylamid und Methacrylamid, ethylenisch ungesättigte Nitrile wie Methacrylnitril und Acrylnitril, Hydroxyalkylester der vorgenannten α,β-ethylenisch ungesättigten C₃-C₈-Monocarbonsäuren und der C₄-C₈-Dicarbonsäuren, insbesondere Hydroxyethylacrylat, Hydroxyethylmethacrylat, 2- und 3-Hydroxypropylacrylat, 2- und 3-Hydroxypropylmethacrylat, Ester der vorstehend genannten monoethylenisch ungesättigten Mono-und Dicarbonsäuren mit C₂-C₄-Polyalkylenglykolen, insbesondere die Ester dieser Carbonsäuren mit Polyethylenglykol oder Alkyl-Polyethylenglykolen, wobei der (Alkyl)polyethylenglykol-Rest üblicherweise ein Molekulargewicht im Bereich von 100 bis 3000 gmol⁻¹ aufweist. Zu den Monomeren M^{3b} zählen weiterhin N-Vinylamide wie N-Vinylformamid, N-Vinylpyrrolidon, N-Vinylimidazol und N-Vinylcaprolactam. Der Anteil der Monomere M^{3b} beträgt vorzugsweise nicht mehr als 20 Gew.-%, und insbesondere nicht mehr als 10 Gew.-%, z. B. 0,1 bis 10 und insbesondere 0,5 bis 5 Gew.-%, bezogen auf die Gesamtmenge der Monomere M.

Zu den Monomeren M³ zählen weiterhin monoethylenisch ungesättigte Monomere M^{3c}, die wenigstens eine kationische Gruppe und/oder wenigstens eine im Wässrigen protonierbare Gruppe aufweisen. Zu den Monomeren M^{3c} zählen insbesondere solche, die eine protonierbare Aminogruppe, eine quaternäre Ammoniumgruppe, eine protonierbare Iminogruppe oder eine quaternisierte Iminogruppe aufweisen. Beispiele für Monomere mit einer protonierbaren Iminogruppe sind N-Vinylimidazol und Vinylpyridine. Beispiele für Monomere mit einer quaternisierten Iminogruppe sind N-Alkylvinylpyridiniumsalze und N-Alkyl-N'-vinylimidazoliniumsalze wie N-Methyl-N'-vinylimidazoliniumchlorid oder Methosulfat. Unter den Monomeren M^{3c} werden insbesondere die Monomere der allgemeinen Formel (IX) bevorzugt 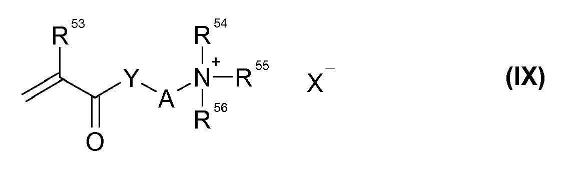 wobei
R⁵³ für Wasserstoff oder C₁-C₄-Alkyl, insbesondere Wasserstoff oder Methyl steht,
R⁵⁴ und R⁵⁵ unabhängig voneinander für C₁-C₄-Alkyl, insbesondere Methyl stehen,
R⁵⁶ für Wasserstoff oder C₁-C₄-Alkyl, insbesondere Wasserstoff oder Methyl steht,
Y für Sauerstoff, NH oder NR⁵⁷ mit R⁵⁷ = C₁-C₄-Alkyl steht,
A für C₂-C₈-Alkylen, z. B. 1,2-Ethandiyl, 1,2-oder 1,3-Propandiyl, 1,4-Butandiyl oder 2-Methyl-1,2-propandiyl, das gegebenenfalls durch 1, 2 oder 3 nicht benachbarte Sauerstoffatome unterbrochen ist, steht,
X für ein Anionenquivalent, z. B. für Cl⁻, HSO₄⁻, 1/2 SO₄²⁻ oder CH₃OSO₃⁻ etc. steht.

Beispiele für Monomere der Formel (IX) sind 2-(N,N-Dimethylamino)ethylacrylat, 2-(N,N-Dimethyiamino)ethylmethacrylat, 2-(N,N-Dimethylamino)ethylacrylamid, 3-(N,N-Dimethylamino)propylacrylamid, 3-(N, N-Dimethylamino)propylmethacrylamid, 2-(N,N-Dimethylamino) ethylmethacrylamid, 2-(N, N. N-Trimethylammonium)ethylacrylat-Chlorid, 2-(N, N,N-Trimethylammonium)ethylmethacrylat-**ChlorId**, 2-(N,N,N-Trimethylammonium)-ethylmethacrylamid-Chlorid, 3-(N,N,N-Trimethylammonium)propylacrylamid-Chlorid, 3-(N,N,N-Trimethylammonium) propylmethacrylamid-**Chlorid,** 2-(N,N,N-Trimethylammonium)-ethylacrylamid-Chlorid, sowie die entsprechenden Methosulfate und Sulfate.

In einer bevorzugten Ausführungsform umfassen die das Polymere bildenden Monomere M wenigstens ein Monomer M^{3a}. Der Anteil der Monomere M^{3a} beträgt dann vorteilhafterweise 0,1 bis 20 Gew.-%, insbesondere 0,5 bis 10 Gew.-%, und besonders bevorzugt 1 bis 7 Gew.-%, bezogen auf die Gesamtmenge der Monomere M.

In einer besonders bevorzugten Ausführungsform der Erfindung weist das Polymer eine anionische Nettoladung auf, d. h. der molare Anteil der Monomere M^{3a} überwiegt den molaren Anteil der Monomere M^{3c} im Polymer und beträgt vorzugsweise 110 mol-% insbesondere wenigstens 120 mol-% und besonders bevorzugt wenigstens 150 mol-%, bezogen auf die Monomere M^{3c} oder die das Polymer umfassenden Monomere M enthalten kein kationisches bzw. potentiell kationisches Monomer M^{3c}.

Zu den Monomeren M² und M³, die hier nicht explizit genannt werden, zählen weiterhin alle der Definition entsprechenden Monomere, die üblicherweise in einer Emulsionspolymerisation eingesetzt werden können.

Bevorzugt ist das Polymer aufgebaut aus 50 bis 98 Gew.-% Monomer M¹, 0,5 bis 50 Gew.-% Monomer M² und 0,1 bis 30 Gew.-% Monomer M^{3a}. Besonderes bevorzugt aus 50 bis 98 Gew.-% Methylmethacrylat und Stearylmethacrylat, 0,5 bis 50 Gew.-% Divinylbenzol und 0,1 bis 30 Gew.-% Natrium 4-Vinylbenzolsulfonat.

Bevorzugt liegen die erfindungsgemäßen Polymere als partikuläre Teilchen vor, insbesondere mit einer mittleren Teilchengröße von kleiner 15µm, insbesondere kleiner 10µm, vorzugsweise kleiner 6µm vor, wobei die mittlere Teilchengröße durch dynamische Lichtstreuung gemessen wird. Methoden dazu finden sich bspw. in WO2005/102044 S.4, Z. 24 - 32. Bevorzugt beträgt die mittlere Teilchengröße für die Anwendung in Anstrichfarben, insbesondere Topcoats, vorzugsweise filmbildenen mit Filmstärken von > 10 µm, kleiner 10 µm. Für penetrierende Systeme, insbesondere Lasuren, werden vorzugsweise mittlere Teiclchengrößen von kleiner 1 µm eingesetzt.

Die erfindungsgemäßen Polymere können weiterhin auch noch ein oder mehrere Inhaltsstoffe wie Emulgatoren, Stabilisatoren bspw. Antioxidantien, Radikalfänger, UV-Stabilisatoren wie UV-Absorber UV-Absorber, Chelatoren, sowie weitere Biozide enthalten (Beispiele siehe unten).

Das erfindungsgemäße Polymer enthält vorzugsweise

0,001 bis 80 Gew.-%, vorzugsweise 0,005 bis 60 Gew.-%, insbesondere 0,01 bis 50 Gew.-%, besonders bevorzugt 0,01 - 30 Gew.-% wenigstens einer heterocyclischen 3-Ringverbindung, insbesondere einer Aziridinverbindung und

0,001 bis 80 Gew.-%, vorzugsweise 0,005 bis 60 Gew.-%, insbesondere 0,01 bis 50 Gew.-% wenigstens eines iodhaltigen Biozids.

Besonders bevorzugte erfindungsgemäße Polymeren enthalten wenigstens ein Aziridin der Formel (VI) und IPBC.

Bevorzugt enthält das erfindungsgemäße Polymer das iodhaltige Biozid und eine Aziridinverbindung in Summe von 1 bis 80 Gew.-%.

Bei der erfindungsgemäßen Verwendung beträgt der Gehalt aller in dem erfindungsgemäßen Polymeren enthaltenen heterocyclischen 3-Ringverbindungen, insbesondere Aziridine im Allgemeinen 1 bis 280 Gew.-% , bevorzugt 2 bis 225 Gew.-%, insbesondere 5 bis 110 Gew.-%, bezogen auf die iodhaltige Verbindung.

Bevorzugt ist es, bezogen auf die iodhaltige Verbindung 0,05 bis 5, vorzugsweise 0,1 bis 4, insbesondere 0,25 bis 2 Äquivalente der in der Summe aller heterocyclischen 3-Ringverbindungen enthaltenen heterocyclischen 3-Ring-Funktionen, insbesondere Aziridinfunktionen einzusetzen.

Die Erfindung betrifft weiterhin ein Verfahren zur Herstellung des erfindungsgemäßen Polymeren, das dadurch gekennzeichnet ist, dass man
a) wenigstens eine jodhaltige Verbindung, wenigstens eine heterocyclische 3-Ring-Verbindung und ein Polymer in Gegenwart wenigstens eines Lösungsmittel mischt und anschließend das Lösungsmittel entfernt, oder
b) wenigstens ein Polymer, vorzugsweise ein thermoplastisches Polymer, wenigstens eine jodhaltige Verbindung und wenigstens eine heterocyclische 3-Ringverbindung ggf. unter Verwendung weiterer Hilfsstoffe extrudiert, oder
c) eine wässrige Dispersion eines vorzugsweise feinverteilten Polymers in Gegenwart einer O/W-Emulsion, enthaltend wenigstens eine iodhaltige Verbindung, wenigstens eine heterocyclische 3-Ring-Verbindung, Wasser und organisches Lösungsmittel schert, vorzugsweise mittels eines Flügelblattrührers oder einer Perlmühle, oder
d) eine wässrige Dispersion eines vorzugsweise feinverteilten Polymers, enthaltend wenigstens eine iodhaltige Verbindung, in Gegenwart einer O/W-Emulsion, enthaltend wenigstens eine heterocyclische 3-Ring-Verbindung, Wasser und organisches Lösungsmittel schert, vorzugsweise mittels eines Flügelblattrührers oder einer Perlmühle, oder
e) eine wässrige Dispersion eines vorzugsweise feinverteilten Polymers, enthaltend wenigstens eine heterocyclische 3-Ring-Verbindung, in Gegenwart einer O/W-Emulsion, enthaltend wenigstens eine iodhaltige Verbindung, Wasser und organisches Lösungsmittel schert, vorzugsweise mittels eines Flügelblattrührers oder einer Perlmühle, oder
f) das Polymer in Gegenwart wengistens einer iodhaltigen Verbindung und wenigstens einer heterocyclischen 3-Ring-Verbindung **herstellt**, vorzugsweise durch Emulsionspolymerisation ethylenisch ungesättigter Monomere.

Für die Alternative a) ist ein solches Lösungsmittel bevorzugt, in dem die iodhaltige Verbindung und die 3-Ringverbindung jeweils zu wenigstens 20 g/l bei 25 °C löslich sind und das geeignet ist, das verwendete Polymer zu lösen bzw. zu quellen. Dabei können das Polymer und die heterocylische 3-Ringverbindung auch ggf. bereits in geeigneten, verschiedenen Lösungsmitteln vorliegen, bevor sie gemischt werden. Als bevorzugte Lösungsmittel kommen dementsprechend typische Lösungsmittel für Polymere, bspw. Beschrieben in K.-F. Egert, "Plastics, Analysis" in Ullmann's Encyclopedia of Industrial Chemistry, Onlineausgabe, publiziert am 15.06.2000, sowie Aromaten, wie Xylol, Toluol oder Alkylnaphthaline, Heteroaromaten wie Pyridin oder Pyrrol, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen (Testbenzin, Shellsol D60 der Fa Shell Chemical), Alkohole, Ether und Ester von Alkoholen wie bspw. Texanol der Fa. Eastman, Butanol oder Glycol, Ketone, wie Aceton, Methylethylketon, Methylisobutylketon oder Cyclohexanon, cyclische Ether wie Tetrahydrofuran, insbesondere stark polare aprotische Lösungsmittel, wie Dimethylformamid, Dimethylsulfoxid oder N-Methyl-2-pyrrolidon, sowie z.B. veretherte Glykole, Oligoglykole und Polyglykole, veretherte Polyole und veresterte Polyole, Ester von ein- sowie mehrwertigen Carbonsäuren, z.B. Adipinsäuredüsobutylester und Maleinsäuredüsobutylester (z.B. Rhodiasolv® DIB) sowie Mischungen davon in Frage.

Insbesondere wird das Polymer, vorzugsweise ein Polymer auf Basis von ethylenisch ungesättigten Monomeren hierbei angelöst bzw. quillt auf, so dass die Additive in das Polymer migrieren können.

Bei der Alternative b) können wenigstens eine jodhaltige Verbindung und/oder wenigstens eine heterocyclische 3-Ringverbindung auch in Form eines Compounds oder eines Masterbatches zum Polymer dazugegeben werden. Dabei enthält besagtes Compound neben dem Polymer noch wenigstens eine der genannten Iod und/oder 3-Ringverbindungen, insbesondere in einem Anteil von bis zu 70 Gew.-%. Bei der Extrusion nach Alternative b) kommen bevorzugt Temperaturen von 150 bis 300 zum Einsatz °C.

Bevorzugt ist die Herstellung nach der Verfahrensalternative d). Die Herstellung der O/W-Emulsion der in einem geeigneten organischen Lösungsmittel gelösten heterocylischen 3-Ringverbindung, insbesondere eines Aziridins, erfolgt ggf. unter Zusatz geeigneter Emulgatoren und vorzugsweise unter Anwendung hoher Scherkräfte (z.B. Ultraturrax, Ultraschallhomogenisator, Hochdruckhomogenisator). Die Zugabe der O/W-Emulsion der heterocyclischen 3-Ringverbindung, insbesondere eines Aziridins zu der Dispersion der Polymerphase erfolgt vorzugsweise unter niedriger Scherkraft (z.B. Flügelblattrührer, Schaufeltrockner). Die Beladung der Polymerphase mit der heterocyclischen 3-Ringverbindung, insbesondere mit einem Aziridin, erfolgt vorzugsweise durch die Einwirkung hoher Scherkräfte auf die erhaltene Suspoemulsion, bspw. durch Einsatz einer Perlmühle.

Als organische Lösungsmittel sind insbesondere Ester zweiwertiger Carbonsäuren, bspw. Mischungen enthaltend Diisobutyladipat, Diisobutylglutarat, Diisobutylsuccinat (z.B. Rhodiasolv^{®}DIB geeignet.

Unter "feinverteilt" wird vorzugsweise eine mittlere Teilchengröße von kleiner 15µm, vorzugsweise kleiner 6µm verstanden.

Die Verfahrensweisen d) bis e) werden vorzugsweise bei einer Temperatur von 0 bis 30 °C, insbesondere bei 15 bis 25 °C durchgeführt.

Die Verfahrensweise f) wird vorzugsweise bei einer Temperatur von 20 bis 110 °C, insbesondere bei 50 bis 95 °C durchgeführt.

Darüber hinaus ist auch die Herstellung nach der Verfahrensalternative f) bevorzugt.

Ggf. weitere Zusätze können bei allen Verfahrensweisen in fester, flüssiger oder in gelöster, dispergierter oder emulgierter Form zugegeben werden.

Geeignete Methoden zur Herstellung von mit Bioziden ausgerüsteten Polymerlatices sind bspw. in der WO 2005/102044, beschrieben.

Die in den Ausführungen c)-e) des erfindungsgemäßen Verfahrensalternativen genannten feinverteilten Polymere bzw. Polymerlatices können bspw. durch Mahlung der entsprechenden Polymere erhalten werden, vorzugsweise:
a. durch Trockenmahlung, bspw. durch Luftstrahlmühlen, und anschließender Dispergierung der erhaltenen Polymerpulver in Wasser, ggf. unter Zusatz von Dispergierhilfsmitteln oder
b. durch Nassmahlung, bspw. unter Verwendung einer Perlmühle und ggf. unter Zusatz von Dispergierhilfsmitteln.

Die in den Ausführungen c)-e) der erfindungsgemäßen Zusammensetzung genannten feinverteilten Polymere bzw. Polymerlatices können durch radikalische, wässrige Emulsions-, insbesondere Mikroemulsionspolymerisation, im Folgenden allgemein als Emulsionspolymerisation bezeichnet, hergestellt werden. Die Polymerisation erfolgt hierbei analog zur konventionellen Emulsionspolymerisation mit dem Unterschied, dass die zu polymerisierende Monomeremulsion zusätzlich die iodhaltige Verbindung als auch die heterocyclische 3-Ring-Verbindung in den Monomertröpfchen gelöst enthält.

Bevorzugt erfolgt die Polymerisation nach der erfindungsgemäßen Verfahrensalternative f) oder die eingesetzten Polymerdispersionen nach den Alternativen d) und e) nach einem sogenannten Monomerzulaufverfahren, d. h. die Hauptmenge, vorzugsweise wenigstens 70 % und insbesondere wenigstens 90 % der Lösung der Additiven, hier also die iodhaltige Verbindung und oder die heterocyclische 3-Ringverbindung, in den Monomeren M, bzw. die Hauptmenge, vorzugsweise wenigstens 70 % und insbesondere wenigstens 90 % der Monomer/Additiv-Emulsion wird im Verlauf der Polymerisationsreaktion dem Polymerisationsgefäss zugeführt. Vorzugsweise erfolgt die Zugabe der Monomer/Additiv-Lösung bzw. Emulsion über einen Zeitraum von wenigstens 0,5 h, vorzugsweise wenigstens 1 h, z.B. 1 bis 10 h und insbesondere 2 bis 6 h. Die Zugabe der Monomer/Additiv-Lösung bzw. Emulsion kann mit konstanter oder veränderlicher Zugaberate, z.B. in Intervallen mit konstanter Zugaberate oder mit veränderlicher Zugaberate oder kontinuierlich mit veränderlicher Zugaberate erfolgen. Die Zusammensetzung der Monomer/Additiv-Lösung bzw. Emulsion kann während der Zugabe konstant bleiben oder geändert werden, wobei Änderungen sowohl bezüglich der Monomerzusammensetzung als auch bezüglich der Art des Additives oder der Konzentration des Additives vorgenommen werden können.

Eine bevorzugte Polymerisation nach der erfindungsgemäßen Verfahrensalternative f) oder für die eingesetzten Polymerdispersionen nach den Alternativen d) und e) ist die sogenannte Stufenpolymerisation, dadurch gekennzeichnet, dass im Verlauf der Monomerzugabe die Monomerzusammensetzung derart geändert wird, dass in den Polymerteilchen Polymerbereiche mit unterschiedlicher Glasübergangstemperatur erhalten werden.

Eine besonders bevorzugte Polymerisation ist die Durchführung der Polymerisation ohne Emulgator (= emulgatorfreie Emulsionspolymerisation), wobei die sich bildenden Polymerpartikel durch die copolymerisierten, ladungstragenden bzw. potentiell ladungstragenden Monomere M^{3a} und/oder M^{3c}, die dem sich bildenden Polymer eine positive oder negative Nettoladung verleihen, stabilisiert werden. Hierbei können die ladungstragenden bzw. potentiell ladungstragenden Monomere M^{3a} und M^{3c} in der Monomerenmischung M oder in der Wasserphase gelöst vorliegen.

Für die Herstellung der erfindungsgemäßen Polymeren hat es sich als vorteilhaft erwiesen, wenn die Emulsionspolymerisation in Gegenwart eines Saatpolymers (Saatlatex) durchführt wird. Hierbei handelt es sich um einen feinteiligen Polymerlatex, dessen mittlere Teilchengrösse üblicherweise nicht mehr als 100 nm, insbesondere nicht mehr als 80 nm und besonders bevorzugt nicht mehr als 50 nm beträgt, jeweils bestimmt durch Laserbeugung (bspw. mit einem Coulter LS, Fa. Beckmann Coulter). Die den Saatlatex konstituierenden Monomere enthalten vorzugsweise
a) wenigstens 30 Gew.-%, vorzugsweise zu 40 bis 99,5 Gew.-% und besonders bevorzugt 50 bis 98 Gew.-% wenigstens eines von den Monomeren M¹,
b) 0,1 bis 60 Gew.-%, insbesondere 0,5 bis 50 Gew.-% wenigstens eines von den Monomeren M²,
c) 0,01 bis 40 Gew.-%, insbesondere 0,1 bis 30 Gew.-% wenigstens eines von den Monomeren M³.

Die Menge an Saatlatex beträgt üblicherweise 0,01 bis 10 Gew.-%, insbesondere 0,1 bis 6 Gew.-%, bezogen auf die zu polymerisierenden Monomere M. Vorzugsweise befindet sich die Hauptmenge, und insbesondere die Gesamtmenge des Saatlatex zu Beginn der Polymerisation vollständig im Reaktionsgefäss. Der Saatlatex kann auch in-situ im Polymerisationsgefäss durch radikalische Emulsionspolymerisation der den Saatlatex bildenden Monomere generiert werden, wobei die den Saatlatex bildenden Monomere aus den vorgenannten Monomeren M¹, M² und M³ ausgewählt sind. Die gewünschte Teilchengrösse des Saatlatex kann in an sich bekannter Weise über das Verhältnis von Monomer zu Emulgator bzw. im Falle einer emulgatorfreien Verfahrensweise über das Verhältnis der nicht ladungstragenden Monomere M¹, M² und M^{3b} zu den ladungstragenden Monomeren M^{3a} und M^{3c} gesteuert werden.

Besonders bevorzugt erfolgt die Polymerisation im Rahmen einer sogenannten Miniemulsionspolymerisation (siehe bspw. F.J. Schork, G.W. Poehlein, S. Wang, J. Reimers, J. Rodrigues, C. Samer, Colloids Surf. A: Physicochem. Eng. Asp. 1999, 153, 39), die dadurch gekennzeichnet ist, dass zunächst eine Emulsion enthaltend Monomere M, Additive im obigen Sinne, Emulgator, in den Monomeren M löslicher Co-Emulgator und Wasser durch Anwendung hoher Scherung bzw. Scherenergie, bspw. durch Verwendung von Stator-Rotor Dispergierwerkzeugen, Ultraschallsonden etc., mit Tröpfchengrößen <10µm, vorzugsweise <6µm und insbesondere <1µm hergestellt werden, worauf die diskreten, monomerhaltigen Öltropfchen der Emulsion durch Zusatz von Radikalstartern und ggf. erhöhter Temperatur in eine polymere Phase überführt werden. Als Co-Emulgatoren kommen grundsätzlich die in der Literatur zum Thema "Miniemulsionspolymerisation" beschriebenen Verbindungen, bspw. langkettige Alkane wie Hexadecan, in Frage sowie auch die in der vorliegenden Erfindung genannten hydrophoben Monomere M¹ wie bspw. Stearylmethacrylat.

Die für die erfindungsgemäße Emulsions- bzw. Miniemulsionspolymerisation geeigneten Starter sind die für eine Emulsions- bzw. Miniemulsionspolymerisation geeigneten und üblicherweise verwendeten Polymerisationsinitiatoren, die eine radikalische Polymerisation der Monomere M auslösen. Hierzu zählen Azoverbindungenwie 2,2'-Azobis-isobutyronitril, 2,2'-Azobis(2-methyl butyronitril), 2,2'-Azobis[2-methyl-N-(-2-hydroxyethyl)propionamid, 1 , 1 '-Azobis(1-cyclo hexancarbonitril), 2, 2 '-Azobis(2,4-dimethylvaleronitril), 2,2'-Azobis(N, N'-dimethyleniso butyroamidin)dihydrochlorid, und 2,2'-Azobis(2-amidinopropan) dihydrochlorid, organische oder anorganische Peroxide wie Diacetylperoxid, Di-tert.-butylperoxid, Diamylperoxid, Dioctanoylperoxid, Didecanoylperoxid, Dilauroylperoxid, Dibenzoylperoxid, Bis(o-toluyl)peroxid, Succinylperoxid, tert.-Butylperacetat, tert.-Butylpermaleinat, tert.-Butylperisobutyrat, tert.-Butylperpivalat, tert.-Butylperoctoat, tert.-Butylperneodecanoat, tert.-Butylperbenzoat, tert.-Butylperoxid, tert.-Butylhydroperoxid, Cumolhydroperoxid, tert.-Butylperoxi-2-ethylhexanoat und Düsopropylperoxidicarbamat, Salze der Peroxodischwefelsäure wie bspw. Natriumperoxodisulfat und Redox-Initiatorsysteme.

Vorzugsweise setzt man wasserlösliche Initiatoren ein, z. B. kationische Azoverbindungen wie Azobis(dimethylamidinopropan), Salze der Peroxodischwefelsäure, insbesondere ein Natrium-, Kalium- oder Ammoniumsalz oder ein Redoxinitiatorsystem, das als Oxidationsmittel für ein Salz der Peroxodischwefelsäure, Wasserstoffperoxid oder ein organisches Peroxid wie tert.-Butylhydroperoxid fungiert. Als Reduktionsmittel enthalten sie vorzugsweise eine Schwefelverbindung, die insbesondere ausgewählt ist unter Natriumhydrogensulfit, Natriumhydroxymethansulfmat und dem Hydrogensulfit-Addukt an Aceton. Weitere geeignete Reduktionsmittel sind phosphorhaltige Verbindungen wie phosphorige Säure, Hypophosphite und Phosphinate, sowie Hydrazin bzw. Hydrazinhydrat und Ascorbinsäure. Weiterhin können Redoxinitiatorsysteme einen Zusatz geringer Mengen von Redoxmetallsalzen wie Eisensalze, Vanadiumsalze, Kupfersazle, Chromsalze oder Mangansalze enthalten wie beispielsweise das Redoxinitiatorsystem Ascorbinsäure/Eisen(II)sulfat/Natriumperoxodisulfat.

Üblicherweise setzt man den Initiator in einer Menge von 0,02 bis 2 Gew.-% und insbesondere 0,05 bis 1,5 Gew.-%, bezogen auf die Menge der Monomere M ein. Die optimale Menge an Initiator hängt naturgemäss von dem eingesetzten Initiatorsystem ab und kann vom Fachmann in Routineexperimenten ermittelt werden. Der Initiator kann teilweise oder vollständig im Reaktionsgefäss vorgelegt werden. Vorzugsweise gibt man die Hauptmenge des Initiators, insbesondere wenigstens 80 %, z. B. 80 bis 99, 5 % des Initiators im Verlauf der Polymerisation in den Polymerisationsreaktor, bspw. durch Dosierpumpen.

Druck und Temperatur sind für die Herstellung der erfindungsgemässen Polymere von untergeordneter Bedeutung. Die Temperatur hängt naturgemäss vom eingesetzten Initiatorsystem ab und eine optimale Polymerisationstemperatur kann vom Fachmann durch Routineexperimente ermittelt werden. Üblicherweise liegt die Polymerisationstemperatur im Bereich von 20 bis 110 °C, häufig im Bereich von 50 bis 95 °C. Der Polymerisation wird üblicherweise bei Normaldruck bzw. Umgebungsdruck durchgeführt. Sie kann aber auch bei erhöhtem Druck, z. B. bis 3 bar oder bei geringfügig erniedrigtem Druck z. B. > 800 mbar durchgeführt werden.

Zur Durchführung des bevorzugten erfindungsgemäßen Verfahrensalternative f) , insbesondere der Emulsionspolymerisationen ist eine Stabilisierung der Polymerteilchen in dem wässrigen Medium ratsam. Bis auf das emulgatorfreie Verfahren sind zur Stabilisierung der erfindungsgemäßen Polymere in Form von Dispersionen oberflächenaktive Substanzen, bspw. Emulgatoren und Schutzkolloide, vorteilhaft. Hierzu zählen sowohl Schutzkolloide als auch niedermolekulare Emulgatoren, wobei letztere im Unterschied zu den Schutzkolloiden vorzugsweiseein Molekulargewicht unterhalb von 2000 g/mol, insbesondere unterhalb 1000 g/mol (Massenmittel) aufweisen. Die Schutzkolloide und Emulgatoren können sowohl kationischer, anionischer, neutraler als auch zwitterionischer Natur sein.

Beispiele für anionische oberflächenaktive Substanzen sind anionische Emulgatoren wie Alkylphenylsulfonate, Phenylsulfonate, Alkylsulfate, Alkylsulfonate, Alkylethersulfate, Alkylphenolethersulfate, Alkylpolyglykoletherphosphate, Alkyldiphenylethersulfonate, Polyarylphenyletherphosphate, Alkylsulfosuccinate, Olefinsulfonate, Paraffmsulfonate, Petroleumsulfonate, Tauride, Sarkoside, Fettsäuren, Alkylnaphthalinsulfonsäuren, Naphthalinsulfonsäuren, einschliesslich ihrer Alkali-, Erdalkali-, Ammonium- und Amin-Salze. Beispiele für anionische Schutzkolloide sind Ligninsulfonsäuren, Kondensationsprodukte sulfonierter Naphthaline mit Formaldehyd oder mit Formaldehyd und Phenol und gegebenenfalls Harnstoff sowie Kondensationsprodukte aus Phenolsulfonsäure, Formaldehyd und Harnstoff, Lignin-Sulfit-Ablauge und Ligninsulfonate sowie Polycarboxylate wie Polyacrylate, Maleinsäureanhydrid/Olefin-Copolymere (z. B. Sokalan® I CP9, BASF) sowie die Alkali-, Erdalkali-, Ammonium- und Amin-Salze der vorgenannten Schutzkolloide.

Nichtionische Emulgatoren sind beispielsweise Alkylphenolalkoxylate, Alkoholalkoxylate, Fettaminalkoxylate, Polyoxyeethylenglycerolfettsäureester, Rizinusölalkoxylate, Fettsäurealkoxylate, Fettsäureamidalkoxylate, Fettsäurepolydiethanolamide, Lanolineth-oxylate, Fettsäurepolyglykolester, Isotridecylalkohol, Fettsäureamide, Methylcellulose, Fettsäureester, Silicon-Öle, Alkylpolyglykoside und Glycerolfettsäureester. Beispiele für nichtionische Schutzkolloid**e sind Polyethyl** englykol, Polypropylenglykol, Polyethylenglykolpolypropylenglykol-Blockcopolymere, Polyethylenglykolalkylether, Polypropylenglykolalkylether, Polyethylenglykolpolypropylen-glykolether-Blockcopolymere und deren Gemische.

Beispiele für kationische Emulgatoren sind quartäre Ammoniumsalze, z. B. Trimethyl- und Triethyl-C₆-C₃₀-alkylammoniumsalze wie Cocotrimethylammoniumsalze, Trimethylcetylammoniumsalze, Dimethyl- und Diethyl-di-C₄-C₂₀-alkylammoniumsalze wie Didecyldimethylammoniumsalze und Dicocodimethylammoniumsalze, Methyl- und Ethyl-tri-C₄-C₂₀-alkylammoniumsalze wie Methyltrioctylammoniumsalze, C₁-C₂₀-Alkyl-di-C₁-C₄-alkylbenzylammoniumsalze wie Triethylbenzylammoniumsalze und Cocobenzyldimethylammoniumsalze, Methyl- und Ethyl-di-C₄-C₂₀ alkylpoly(oxyethyl)ammoniumsalze, z. B. Didecylmethylpoly(oxyethyl) ammoniumsalze, N-C₆-C₂₀-Alkylpyridiniumsalze, z. B. N-Laurylpyridiniumsalze, N-Methyl- und N-Ethyl-N-C₆-C₂₀-alkylmorpholiniumsalze, sowie N-Methyl-und N-Ethyl-N'-C₆-C₂₀-alkylimidazoliniumsalze, insbesondere die Halogenide, Borate, Carbonate, Formiate, Acetate, Propionate, Hydrogencarbonate, Sulfate und Methosulfate.

Beispiele für kationische Schutzkolloide sind Homo- und Copolymere der obengenannten Monomere M^{3a} und M^{3c} mit einem Gehalt an Monomeren M^{3a} oder M^{3c} von wenigstens 20 Gew.-%, insbesondere wenigstens 30 Gew.-%, beispielsweise Homopolymere von N-Vinyl-N-methylimidazoliniumSalzen oder von N-Alkylvinylpyridiniumsalzen sowie Copolymere dieser Monomere mit neutralen, vorzugsweise mit Wasser mischbaren Monomeren M^{3b} Zwitterionische Emulgatoren sind solche mit betainischen Strukturen. Derartige Substanzen sind dem Fachmann bekannt und können dem einschlägigen Stand der Technik entnommen werden (siehe beispielsweise R. Heusch, in Ullmanns Encylopedia of Industrial Chemistry, 5th ed. on CD-ROM, Wiley-VCH 1997, "Emulsions", Kapitel 7, Tabelle 4).

Die erfindungsgemäßen Polymeren können in fester Form, bspw. als Pulver oder Granulate oder in flüssiger Form, insbesondere als Dispersionen in Wasser oder organischen Lösungsmitteln (Latices) eingesetzt werden. Entsprechend betrifft die Erfindung auch Polymerpräparationen, enthaltend neben dem erfindungsgemäßen Polymer noch wenigstens einen Hilfsstoff.

Bevorzugt sind als Polymerpräparationen wässrige Polymerdispersionen, enthaltend das erfindungsgemäße Polymer und vorzugsweise Benetzungsmittel, Verdickungsmittel, Entschäumer, Konservierungsmittel und/oder Stabilisatoren.

Bevorzugt haben die eingesetzten Benetzungsmittel einen geringen Dampfdruck bei Raumtemperatur. Als Benetzungsmittel können alle üblicherweise in Dispersionen verwendeten Benetzungsmittel verwendet werden, bspw. Polykondensate der Naphthalinsulfonsäure bzw. deren Salze. Bevorzugt verwendet man Oligo- oder Polyalkylenglycole oder Triole, oder Ether der vorgenannten Verbindungen, insbesondere mit einem Molekulargewicht von kleiner 1000 g/mol. Ganz bevorzugt wird Ethylenglycol, Diethylenglycol, Triethylenglycol, Tetraethylenglycol, Polyethylenglycol, Propylenglycol, Dipropylenglycol, Polypropylenglcol, Glycerin oder Mono oder Di- Methyl, Ethyl, Propyl oder Butylether der vorgenannten Verbindungen. Der Anteil an Benetzungsmitteln kann in einem relativ breiten Bereich variiert werden. Bevorzugt setzt man 1 bis s 10 Gew .-%, insbesondere 2 bis 7 Gew.-%, bezogen auf die erfindungsgemäße Polymerpräparationen, insbesondere die Polymerdispersion ein.

Als Verdickungsmittel können prinzipiell alle Stoffe verwendet werden, die im Wasser eine räumliche Struktur aufbauen und somit die Sedimentation verhindern oder verlangsamen können. Bevorzugt verwendet man Polysaccharide, Xanthan Gum, Natrium oder Magnesium Silicate, Heteropolysaccharide, Alginate, Carboxymethylcellulose, Gummi arabicum oder Polyacrylsäuren. Ganz bevorzugt verwendet man Xanthan Gum. Der Anteil an Verdickungsmitteln in der Polymerpräparationen, insbesondere die Polymerdispersion beträgt bevorzugt 0,1 bis 0,5 Gew.-%, insbesondere 0,3 bis 0,4 Gew.-%, bezogen auf die Dispersion.

Als Entschäumer werden im Allgemeinen oberflächenaktive Verbindungen eingesetzt, die in der tensidischen Lösung nur schwach löslich sind. Bevorzugt handelt es sich um Entschäumer, die sich von natürlichen Fetten und Ölen, Petroleum-Derivaten oder Siliconölen ableiten. Der Anteil an Entschäumern in der erfindungsgemäßen Polymerpräparationen, insbesondere die Polymerdispersion beträgt bevorzugt 0,01 bis 2 Gew.-%, insbesondere 0,05 bis 1 Gew.-%, bezogen auf die Dispersion.

Als gegebenenfalls zusätzlich enthaltene Konservierungsmittel können alle Bakterizide eingesetzt werden, die eine antimikrobiell Wirkung im gewünschten Sinne besitzen. Hierbei können gegebenenfalls ein oder mehrere dieser Stoffe eingesetzt werden.

Bei den gegebenenfalls einsetzbaren Stabilisatoren kann es sich um Antioxidantien, Radikalfänger oder UV-Absorber handeln. Gegebenenfalls können ein oder mehrere dieser Stoffe eingesetzt werden. Der Anteil dieser Hilfsmittel an den erfindungsgemäßen Polymerpräparationen, insbesondere an den Polymerdispersionen beträgt bevorzugt 0,1 bis 3 Gew.-%, insbesondere 0,5 bis 2 Gew.-%, bezogen auf die Dispersion.

Die nach den Ausführungen c)-f) des erfindungsgemäßen Verfahrens erhaltenden, mit iodhaltiger Verbindung und heterocyclischer 3-Ring-Verbindung beladenen Polymerlatices können in dieser Form als stabilisierte Darreichungsform des iodhaltigen Biozids eingesetzt werden. Ggf. kann das erfindungsgemäße Polymer, in Form der wässrigen Dispersion, nach dem erfindungsgemäßen Verfahrensalternativen c) bis f) aus seinem Latex durch geeignete Isolationsverfahren wie bspw. Filtration, Sprühtrocknung, Wirbelschichttrocknung usw. isoliert werden. Das so erhaltene erfindungsgemäße polymere Material kann ggf. noch durch Einsatz einer Ringsiebmühle desaggregiert werden

Die erfindungsgemäßen Polymere können in Form ihrer Dispersionen entweder keinen oder wenigstens einen Emulgator enthalten. Sofern sie wenigstens einen Emulgator enthalten, enthalten sie vorzugsweise wenigstens einen nicht-ionischen Emulgator und gegebenenfalls einen oder mehrer ionische Emulgatoren.

Die Menge an Emulgator liegt üblicherweise bei 0,1 bis 15 Gew.-%, insbesondere von 0,2 bis 12 Gew.-%, und besonders bevorzugt bei 0,7 bis 10 Gew.-%, bezogen auf die Mischung enthaltend Monomere M und Wirkstoff bzw. auf das Polymer.

Die erfindungsgemäße Polymerpräparation kann als bevorzugte Verbindungen enthalten, beispielsweise Lösungsmittel wie bspw. Ester ein- oder mehrwertiger Carbonsäuren (z.B. Gemische entahltend Düsobutyladipat, Düsobutylglutarat, Düsobutylsuccinat), bevorzugt VOCfreie bzw. VOC-arme Lösungsmittel, wobei unter VOC (volatile organic compounds) flüchtige organische Verbindungen mit einem Siedepunkt von kleiner 250 °C verstanden werden, Chelatisierungsreagentien wie beispielsweise in WO 98/22543 genannt, ein oder mehrere Stabilisatoren aus der Reihe der Antioxidantien, Radikalfänger, UV-Stabilisatoren und/oder UV-Absorber sowie weitere Biozide (Beispiele s. unten). In vielen Fällen werden hier synergistische Effekte beobachtet. Bei den erfindungsgemäßen Zusammensetzungen kann es sich wie beschrieben um die isolierte Polymerphase oder eine Dispersion der Polymerphase in Wasser oder organischen Lösungsmitteln handeln. Die Beladung der Polymerphase der erfindungsgemäßen Zusammensetzung kann auch für diese Verbindungen vorzugsweise analog den Verfahren a) - f) (s.o.) erfolgen. Die Ausrüstung der kontinuierlichen Phase der vorgenannten Dispersionen kann durch Lösen, ggf. unter Zusatz von Lösevermittlern, Emulgieren usw. erfolgen.

Besonders bevorzugt liegt die erfindungsgemäße Polymerpräparation als Feststoffpräparation vor, so bspw. als Pulver, Granulat, insbesondere mit einer mittleren Teilchengröße von 50 bis 2000 µm, oder als Kompaktat, wie bspw. kompaktiertes Pulver wie bspw. Pellets, Tabletten usw..

Ebenfalls besonders bevorzugt liegt die erfindungsgemäße Polymerpräparation als lösemittelbasierte Dispersion vor, wobei zur Einstellung der rheologischen Eigenschaften der Dispersion bspw. Alkydharze, modifizierte Alkydharze, Thixotropieharze usw. sowie weitere Additive wie Hautverhinderer (Antioxidantien), Pigmente, Kristallisationsstabilisatoren usw. zugesetzt werden können.

Weiterhin kann die erfindungsgemäße Polymerpräparation als weitere Inhaltsstoffe Haftmittel wie Carboxymethylcellulose, natürliche und synthetische pulverige, körnige oder latexförmige Polymere enthalten, wie Gummiarabicum, Polyvinylalkohol, Polyvinylacetat, sowie natürliche Phospholipide, wie Kephaline und Lecithine, und synthetische Phospholipide sowie mineralische und vegetabile Öle enthalten. Zudem kann sie Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink sowie für heterocyclische 3-Ring-Verbindungen, insbesondere Aziridinverbindungen, bekannte Stabilisatoren, beispielsweise Tetramethylethylendiamin (TMEDA), Triethylendiamin und das aus WO2004/0506 bekannte 1,4-Diazabicyclo[2.2.2]octan (DABCO) enthalten.

Die Erfindung betrifft weiterhin ein Verfahren zur Herstellung der erfindungsgemäßen Polymerpräparation.

Die erfindungsgemäße Polymerpräparation kann beispielsweise durch Vermischen des erfindungsgemäßen Polymeren mit weiteren Bioziden (s.u.) und Zusatzstoffen wie bspw. Fließverbesserer, Additive zur Erhöhung der elektrischen Leitfähigkeit, Additive zur Einstellung des Staubungsverhaltens usw. hergestellt werden. Diese können aber auch bereits bei der Herstellung des Polymeren selbst nach dem erfindungsgemäßen Verfahren zum Einsatz kommen. Zur Herstellung der erfindungsgemäßen Polymerpräparation in Form von Feststoffmischungen kommen hierbei, ggf. nach Vorbehandlung der zu mischenden Komponenten mit bspw. Siebmühlen wie der Bauermeister-Mühle, geeignete Feststoffmischer wie bspw. Lödige-Mischer, Schaufelmischer, Taumelmischer, Trommelmischer mit Störkörpern usw. zum Einsatz. Auch die Überführung so hergestellter Feststoffmischungen in weitere Ausführungsformen, wie bspw. Granulate, Kompaktate wie Kissen, Tabletten usw. ist unter Verwendung von Wirbelschichtgranulation, Einsatz mechanischer Kompaktierungsanlagen, ggf. unter Zusatz weiterer Additive wie bspw. Bindemittel, möglich.

Eine weitere Ausführungsform der erfindungsgemäßen Polymerpräparation ist eine lösemittelbasierte Dispersion. Hierbei wird die erfindungsgemäße Zusammensetzung vorzugsweise unter starker Scherung bspw. in einem der oben genannten inerten, organischen Lösungsmittel als kontinuierliche Phase (z.B. Isoparaffine wie Isopar^{®} L (Isoparaffin der Fa. Exxon) oder sog. "white spirits" wie bspw. Shellsol^{®} D60) ggf. unter Zusatz von Prozesshilfsmitteln und Stabilisatoren wie bspw. Rheologieadditive (Thixotropier-Harze wie bspw. WorleeThix® S6358, ein thixotropiertes Alkydharz der Fa. Worlee) und ggf. Hautverhinderungsmittel wie bspw. Antiskin^{®} 444 (Fa. Borchers) gemahlen und dispergiert (z.B. Perlmühle).

Darüber hinaus stellt auch eine Weiterverarbeitung der erfindungsgemäßen Polymerpräparation, bspw. in Form des oben beschriebenen, wässrigen Polymerlatex, bspw. durch Ausrüstung mit weiteren Additiven, wie bspw. Rheologieadditive (z.B. Xanthane), Pigmente, Antiabsetzmittel etc. eine erfindungsgemäße Formulierung dar.

Die Wirksamkeit und das Wirkungsspektrum der erfindungsgemäßen Polymeren bzw. der Polymerpräparation oder der unten beschriebenen Zusammensetzungen bzw. der zum Einsatz kommenden iodhaltigen Verbindung kann erhöht werden, wenn gegebenenfalls weitere antimikrobiell wirksame Verbindungen, Fungizide, Bakterizide, Herbizide, Insektizide oder andere Wirkstoffe zur Vergrößerung des Wirkungsspektrums oder Erzielung besonderer Effekte zugesetzt bzw. mit verwendet werden. Diese Mischungen können ein noch breiteres Wirkungsspektrum besitzen. Diese Verbindungen können entweder bei der Herstellung des erfindungsgemäßen Polymeren oder danach bei der Herstellung der erfindungsgemäßen Polymerpräparation zum Einsatz kommen.

In vielen Fällen erhält man dabei synergistische Effekte, d.h. die Wirksamkeit der Mischung ist größer als die Wirksamkeit der Einzelkomponenten. Besonders günstige Mischungspartner sind z.B. die folgenden Verbindungen:
Triazole wie:
   Azaconazol, Azocyclotin, Bitertanol, Bromuconazol, Cyproconazol, Diclobutrazol, Difenoconazol, Diniconazol, Epoxyconazol, Etaconazol, Fenbuconazol, Fenchlorazol, Fenethanil, Fluquinconazol, Flusilazol, Flutriafol, Furconazol, Hexaconazol, Imibenconazol, Ipconazol, Isozofos, Myclobutanil, Metconazol, Paclobutrazol, Penconazol, Propioconazol, Prothioconazol, Simeoconazol, (±)-cis-1-(4-chlorphenyl)-2-(1H-1,2,4-triazol-1-yl)-cycloheptanol, 2-(1-tert-Butyl)-1-(2-chlorphenyl)-3-(1,2,4-triazol-1-yl)-propan-2-ol, Tebuconazol, Tetraconazol, Triadimefon, Triadimenol, Triapenthenol, Triflumizol, Triticonazol, Uniconazol sowie deren Metallsalze und Säureaddukte;
Imidazole wie:
   Clotrimazol, Bifonazol, Climbazol, Econazol, Fenapamil, Imazalil, Isoconazol, Ketoconazol, Lombazol, Miconazol, Pefurazoat, Prochloraz, Triflumizol, Thiazolcar 1-Imidazolyl-1-(4'-chlorophenoxy)-3,3-dimethylbutan-2-on sowie deren Metallsalze und Säureaddukte;
Pyridine und Pyrimidine wie:
   Ancymidol, Buthiobat, Fenarimol, Mepanipyrin, Nuarimol, Pyroxyfur, Triamirol;
Succinat-Dehydrogenase Inhibitoren wie:
   Benodanil, Carboxim, Carboximsulfoxid, Cyclafluramid, Fenfuram, Flutanil, Furcarbanil, Furmecyclox, Mebenil, Mepronil, Methfuroxam, Metsulfovax, Nicobifen, Pyrocarbolid, Oxycarboxin, Shirlan, Seedvax;
Naphthalin-Derivate wie:
   Terbinafin, Naftifin, Butenafin, 3-Chloro-7-(2-aza-2,7,7-trimethyl-oct-3-en-5-in);
Sulfenamide wie:
   Dichlofluanid, Tolylfluanid, Folpet, Fluorfolpet; Captan, Captofol;
Benzimidazole wie:
   Carbendazim, Benomyl, Fuberidazole, Thiabendazol oder deren Salze;
Morpholinderivate wie:
   Aldimorph, Dimethomorph, Dodemorph, Falimorph, Fenpropidin, Fenpropimorph, Tridemorph, Trimorphamid und ihre arylsulfonsauren Salze, wie z.B. p-Toluolsulfonsäure und p-Dodecylphenylsulfonsäure;
Benzthiazole wie:
   2-Mercaptobenzothiazol;
Benzthiophendioxide wie:
   Benzo[b]thiophen-S,S-dioxid-carbonsäurecyclohexylamid;
Benzamide wie:
   2,6-Dichloro-N-(4-trifluoromethylbenzyl)-benzamid, Tecloftalam;
Borverbindungen wie:
   Borsäure, Borsäureester, Borax;
Formaldehyd und Formaldehydabspaltende Verbindungen wie:
   Benzylalkoholmono-(poly)-hemiformal, 1,3-Bis(hydroxymethyl)-5,5-dimethylimidazolidine-2,4-dione (DMDMH), Bisoxazolidine, n-Butanol-hemiformal, Cis 1-(3-Chlorallyl)-3,5,7-triaza-1-**azoniaadamantane chlorid,** 1-[1,3-Bis(hydroxymethyl-2,5-dioxoimidazolidin-4-yl]-1,3-bis(hydroxymethyl)urea, Dazomet, Dimethylolharnstoff, 4,4-Dimethyl-oxazolidine, Ethylenglycol-hemiformal, 7-Ethylbicyclooxazolidine, Hexa-hydro-S-triazine, Hexamethylentetramin, N-Hydroxymethyl-N'-methylthioharnstoff, Methylenbismorpholin, Natrium N-(Hydroxymethyl)glycinat, N-Methylolchloracetamid, Oxazolidine, Paraformaldehyd, Taurolin, Tetrahydro-1,3-oxazin, N-(2-Hydroxypropyl)-amin-methanol, Tetramethylol-acetylen-diharnstoff (TMAD);
Isothiazolinone wie:
   N-Methylisothiazolin-3-on, 5-Chlor-N-methylisothiazolin-3-on, 4,5-Dichloro-N-octylisothiazolin-3-on, 5-Chlor-N-octylisothiazolinon, N-Octyl-isothiazolin-3-on, 4,5-Trimethylen-isothiazolinon, 4,5-Benzisothiazolinon;
Aldehyde wie:
   Zimtaldehyd, Formaldehyd, Glutardialdehyd, β-Bromzimtaldehyd, o-Phthaldialdehyd;
Thiocyanate wie:
   Thiocyanatomethylthiobenzothiazol, Methylenbisthiocyanat;
   quartäre Ammoniumverbindungen und Guanidine wie:
      Benzalkoniumchlorid, Benzyldimethyltetradecylammoniumchlorid, Benzyldimethyldodecylammoniumchlorid, Dichlorbenzyldimethylalkylammoniumchlorid, Didecyldimethylammoniumchlorid, Dioctyldimethylammoniumchlorid, N-Hexadecyltrimethylammoniumchlorid, 1-Hexadecylpyridiniumchlorid, Iminoctadine-tris(albesilat);
Phenole wie:
   Tribromphenol, Tetrachlorphenol, 3-Methyl-4-chlorphenol, 3,5-Dimethyl-4-chlorphenol, Dichlorphen, 2-Benzyl-4-chlorphenol, Triclosan, Diclosan, Hexachlorophen, p-Hydroxybenzoesäuremethylester, p-Hydroxybenzoesäureethylester, p-Hydroxybenzoesäurepropylester, p-Hydroxybenzoesäurebutylester, p-Hydroxybenzoesäureoctylester ,o-Phenylphenol, m-Phenylphenol, p-Phenylphenol, 4-(2-tert.-Butyl-4-methyl-phenoxy)-phenol, 4-(2-Isopropyl-4-methyl-phenoxy)-phenol, 4-(2,4-Dimethyl-phenoxy)-phenol und deren Alkali- und Erdalkalimetallsalze;
Mikrobizide mit aktivierter Halogengruppe wie:
   Bronopol, Bronidox, 2-Brom-2-nitro-1,3-propandiol, 2-Brom-4'-hydroxy-acetophenon, 1-Brom-3-chlor-4,4,5,5-tetramethyl-2-imidazoldinone, β-Brom-β-nitrostyrol, Chloracetamid, Chloramin T, 1,3-Dibrom-4,4,5,5-tetrametyl-2-imidazoldinone, Dichloramin T, 3,4-Dichlor-(3H)-1,2-dithiol-3-o n , 2 , 2-Dibrom-3-nitril-propionamid, 1,2-Dibrom-2,4-dicyanobutan, Halane, Halazone, Mucochlorsäure, Phenyl-(2-chlor-cyan-vinyl)sulfon, Phenyl-(1,2-dichlor-2-cyanvinyl)sulfon, Trichlorisocyanursäure;
Pyridine wie:
   1-Hydroxy-2-pyridinthion (und ihre Cu-, Na-, Fe-, M n-, Zn-Salze), Tetrachlor-4-methylsulfonylpyridin, Pyrimethanol, Mepanipyrim, Dipyrithion, 1-Hydroxy-4-methyl-6-(2,4,4-trimethylpentyl)-2(1H)-pyridin;
Methoxyacrylate oder Ähnliche wie:
   Azoxystrobin, Dimoxystrobin, Fluoxastrobin, Kresoxim-methyl, Metominostrobin, Orysastrobin, Picoxystrobin, Pyraclostrobin, Trifloxystrobin, 2,4-dihydro-5-methoxy-2-methyl-4-[2-[[[[1-[3-(trifluoromethyl)phenyl]ethylidene]amino]oxy]methyl]phenyl]-3H-1,2,4-triazol-3-**one** (CAS-Nr. 185336-79-2);
Metallseifen wie:
   Salze der Metalle Zinn, Kupfer und Zink mit höheren Fett-, Harz-, Naphthensäuren und Phosphorsäure wie z.B. Zinn-, Kupfer-, Zinknaphtenat, -octoat, 2-ethylhexanoat, -oleat, -phosphat, -benzoat;
Metallsalze wie:
   Salze der Metalle Zinn, Kupfer, Zink, sowie auch Chromate und Dichromate wie z.B. Kupferhydroxycarbonat, Natriumdichromat, Kaliumdichromat, Kaliumchromat, Kupfersulfat, Kupferchlorid, Kupferborat, Zinkfluorosilikat, Kupferfluorosilikat;
Oxide wie:
   Oxide der Metalle Zinn, Kupfer und Zink wie z.B. Tributylzinnoxid, Cu₂O, CuO, ZnO;
Oxidationsmittel wie:
   Wasserstoffperoxid, Peressigsäure, Kalium-persulfat;
Dithiocarbamate wie:
   Cufraneb, Ferban, Kalium-N-hydroxymethyl-N'-methyl-dithiobarbamat, Na- oder K-dimethyldithiocarbamat, Macozeb, Maneb, Metam, Metiram, Thiram, Zineb, Ziram;
Nitrile wie:
   2,4,5,6-Tetrachlorisophthalodinitril, Dinatrium-cyano-dithioimidocarbamat;
Chinoline wie:
   8-Hydroxychinolin und deren Cu-Salze;
   sonstige Fungizide und Bakterizide wie:
      Bethoxazin, 5-Hydroxy-2(SH)-furanon; 4,5-Benzdithiazolinon, 4,5-Trimethylendithiazolinon, N-(2-p-Chlorbenzoylethyl)-hexaminiumchlorid, 2-Oxo-2-(4-hydroxy-phenyl)acethydroximsäure-chlorid, Tris-N-(cyclohexyldiazeniumdioxy)-aluminium, N-(Cyclo-hexyldiazeniumdioxy)-tributyl-zinn bzw. K-Salze, Bis-N-(cyclohexyldiazeniumdioxy)-kupfer, Iprovalicarb, Fenhexamid, Spiroxamin, Carpropamid, Diflumetorin, Quinoxyfen, Famoxadone, Polyoxorim, Acibenzolar-S-methyl, Furametpyr, Thifluzamide, Methalaxyl-M, Benthiavalicarb, Metrafenon, Cyflufenamid, Tiadinil, Teebaumöl, Phenoxyethanol,
Ag, Zn oder Cu-haltige Zeolithe allein oder eingeschlossen in polymere Werkstoffe.
Ganz besonders bevorzugt sind Mischungen mit
Azaconazol, Bromuconazol, Cyproconazol, Dichlobutrazol, Diniconazol, Diuron, Hexaconazol, Metaconazol, Penconazol, Propiconazol, Tebuconazol, Dichlofluanid, Tolylfluanid, Fluorfolpet, Methfuroxam, Carboxin, Benzo[b]thiophen-S,S-dioxid-carbonsäurecyclohexylamid, Fenpiclonil, 4-(2,2-Difluoro-1,3-benzodioxol-4-yl)-1H-pyrrol-3-carbonitril, Butenafm, Imazalil, N-Methyl-isothiazolin-3-o n, 5-Chlor-N-methylisothiazolin-3-on, N-Octylisothiazolin-3-on, Dichlor-N-octylisozhiazolinon, Mercaptobenzthiazol, Thiocyanatomethylthiobenzothiazol, Thiabendazol, Benzisothiazolinon**,** N-(2-Hydroxypropyl)-amino-methanol, Benzylalkohol-(hemi)-formal, N-Methylolchloraceta m i d, N-(2-Hydroxypropyl)-amin-methanol, Glutaraldehyd, Omadine, Zn-Omadine, Dimethyldicarbonat, 2-Brom-2-nitro-1,3-propandiol, Bethoxazin, o-Phthaldialdehyd, 2,2-Dibrom-3-nitril-propionamid, 1,2-Dibrom-2,4-dicyanobutan, 1,3-Bis(hydroxymethyl)-5,5-dimethylimidazolidine-2,4-dione (DMDMH), Tetramethylol-acetylen-diharnstoff (TMAD), Ethylenglycol-hemiformal, p-Hydroxybenzoesäure, Carbendazim, Chlorophen, 3-Methyl-4-chlorphenol, o-Phenylphenol.
Desweiteren werden neben den oben genannten Fungiziden und Bakteriziden auch gut wirksame Mischungen mit anderen Wirkstoffen hergestellt:
   Insektizide / Akarizide / Nematizide:
      Abamectin, Acephat, Acetamiprid, Acetoprole, Acrinathrin, Alanycarb, Aldicarb, Aldoxycarb, Aldrin, Allethrin, Alpha-cypermethrin, Amidoflumet, Amitraz, Avermectin, Azadirachtin, Azinphos A, Azinphos M, Azocyclotin,
      Bacillus thuringiensis, Barthrin, 4-Bromo-2(4-chlorphenyl)-1-(ethoxymethyl)-5-(trifluoromethyl)-1H-pyrrole-3-carbonitrile, Bendiocarb, Benfuracarb, Bensultap, Betacyfluthrin, Bifenthrin, Bioresmethrin, Bioallethrin, Bistrifluron, Bromophos A, Bromophos M, Bufencarb, Buprofezin, Butathiophos, Butocarboxin, Butoxycarboxim,
      Cadusafos, Carbaryl, Carbofuran, Carbophenothion, Carbosulfan, Cartap, Chinomethionat, Cloethocarb, Chlordane, Chlorethoxyfos, Chlorfenapyr, Chlorfenvinphos, Chlorfluazuron, Chlormephos, N-[(6-Chloro-3-pyridinyl)-methyl]-N'-cyano-N-methyl-ethanimidamid, Chlorpicrin, Chlorpyrifos A, Chlorpyrifos M, Cis-Resmethrin, Clocythrin, Clothiazoben, Cypophenothrin Clofentezin, Coumaphos, Cyanophos, Cycloprothrin, Cyfluthrin, Cyhalothrin, Cyhexatin, Cypermethrin, Cyromazin,
      Decamethrin, Deltamethrin, Demeton M, Demeton S, Demeton-S-methyl, Diafenthiuron, Dialiphos, Diazinon, 1,2-Dibenzoyl-1(1,1-dimethyl)-hydrazin, DNOC, Dichlofenthion, Dichlorvos, Dicliphos, Dicrotophos, Difethialon, Diflubenzuron, Dimethoat, 3,5-Dimethylphenylmethylcarbamat, Dimethyl-(phenyl)-silyl-methyl-3-phenoxybenzylether, Dimethyl-(4-Ethoxyphenyl)-silylmethyl-3-phenoxybenzylether, Dimethylvinphos, Dioxathion, Disulfoton,
      Eflusilanate, Emamectin, Empenthrin, Endosulfan, EPN, Esfenvalerat, Ethiofencarb, Ethion, Ethofenprox, Etrimphos, Etoxazole, Etobenzanid,
      Fenamiphos, Fenazaquin, Fenbutatinoxid, Fenfluthrin, Fenitrothion, Fenobucarb, Fenothiocarb, Fenoxycarb, Fenpropathrin, Fenpyrad, Fenpyroximat, Fensulfothion, Fenthion, Fenvalerate, Fipronil, Flonicamid, Fluacrypyrim, Fluazuron, Flucycloxuron, Flucythrinate, Flufenerim, Flufenoxuron, Flupyrazofos, Flufenzine, Flumethrin Flufenprox, Fluvalinate, Fonophos, Formethanate, Formothion, Fosmethilan Fosthiazat, Fubfenprox, Furathiocarb,
      Halofenocid, HCH (CAS RN: 58-89-9), Heptenophos, Hexaflumuron, Hexythiazox, Hydramethylnon, Hydropren,
      Imidacloprid, Imiprothrin, Indoxycarb, Iprinomectin, Iprobenfos, Isazophos, Isoamidophos, Isofenphos, Isoprocarb, Isoprothiolane, Isoxathion, Ivermectin,
      Kadedrin
      Lambda-Cyhalothrin, Lufenuron,
      Malathion, Mecarbam, Mervinphos, Mesulfenphos, Metaldehyd, Methacrifos, Methamidophos, Methidathion, Methiocarb, Methomyl, Metalcarb, Milbemectin, Monocrotophos, Moxiectin,
      Naled, NI 125, Nicotin, Nitenpyram, Noviflumuron,
      Omethoat, Oxamyl, Oxydemethon M, Oxydeprofos,
      Parathion A, Parathion M, Penfluron, Permethrin, 2-(4-Phenoxyphenoxy)-ethyl-ethylcarbamat, Phenthoat, Phorat, Phosalon, Phosmet, Phosphamidon, Phoxim, Pirimicarb, Pirimiphos M, Pirimiphos A, Prallethrin, Profenophos, Promecarb, Propaphos, Propoxur, Prothiophos, Prothoat,
      Pymetrozin, Pyrachlophos, Pyridaphenthion, Pyresmethrin, Pyrethrum, Pyridaben, Pyridalyl, Pyrimidifen, Pyriproxifen, Pyrithiobac-natrium
      Quinalphos,
      Resmethrin, Rotenon,
      Salithion, Sebufos, Silafluofen, Spinosad, Spirodiclofen, Spiromesifen, Sulfotep, Sulprofos,
      Tau-fluvalinat, Taroils, Tebufenozide, Tebufenpyrad, Tebupirimphos, Teflubenzuron, Tefluthrin, Temephos, Terbam, Terbufos, Tetrachlorvinphos, Tetramethrin, Tetramethacarb, Thiacloprid, Thiafenox, Thiamethoxam, Thiapronil, Thiodicarb, Thiofanox, Thiazophos, Thiocyclam, Thiomethon, Thionazin, Thuringiensin, Tralomethrin, Transfluthrin, Triarathen, Triazophos, Triazamate, Triazuron, Trichlorfon, Triflumuron, Trimethacarb,
      Vamidothion, Xylylcarb, Zetamethrin;
Molluscizide:
   Fentinacetat, Metaldehyd, Methiocarb, Niclosamid;
Herbizide und Algizide:
   Acetochlor, Acifluorfen, Aclonifen, Acrolein, Alachlor, Alloxydim, Ametryn, Amidosulfuron, Amitrole, Ammonium sulfamate, Anilofos, Asulam, Atrazine, Azafenidin, Aziptrotryn, Azimsulfuron,
   Benazolin, Benfluralin, Benfuresat, Bensulfuron, Bensulfid, Bentazon, Benzofencap, Benzthiazuron, Bifenox, Bispyribac, Bispyribac-Natrium, Borax, Bromacil, Bromobutide, Bromofenoxim, Bromoxynil, Butachlor, Butamifos, Butralin, Butylat, Bialaphos, Benzoyl-prop, Bromobutide, Butroxydim,
   Carbetamid, Carfentrazone-ethyl, Carfenstrol, Chlomethoxyfen, Chloramben, Chlorbromuron, Chlorflurenol, Chloridazon, Chlorimuron, Chlornitrofen, Chloressigsäure, Chloransulam-methyl, Cinidon-ethyl, Chlorotoluron, Chloroxuron, Chlorpropham, Chlorsulfuron, Chlorthal, Chlorthiamid, Cinmethylin, Cinofulsuron, Clefoxydim, Clethodim, Clomazone, Chlomeprop, Clopyralid, Cyanamide, Cyanazine, Cycloat, Cycloxydim, Chloroxynil, Clodinafop-propargyl, Cumyluron, Clometoxyfen, Cyhalofop, Cyhalofop-butyl, Clopyrasuluron, Cyclosulfamuron,
   Diclosulam, Dichlorprop, Dichlorprop-P, Diclofop, Diethatyl, Difenoxuron, Difenzoquat, Diflufenican, Diflufenzopyr, Dimefuron, Dimepiperate, Dimethachlor, Dimethipin, Dinitramine, Dinoseb, Dinoseb Acetate, Dinoterb, Diphenamid, Dipropetryn, Diquat, Dithiopyr, Diduron, DNOC, DSMA, 2,4-D, Daimuron, Dalapon, Dazomet, 2,4-DB, Desmedipham, Desmetryn, Dicamba, Dichlobenil, Dimethamid, Dithiopyr, Dimethametryn,
   Eglinazin, Endothal, EPTC, Esprocarb, Ethalfluralin, Ethidimuron, Ethofumesat, Ethobenzanid, Ethoxyfen, Ethametsulfuron, Ethoxysulfuron,
   Fenoxaprop, Fenoxaprop-P, Fenuron, Flamprop, Flamprop-M, Flazasulfuron, Fluazifop, Fluazifop-P, Fuenachlor, Fluchloralin, Flufenacet Flumeturon, Fluorocglycofen, Fluoronitrofen, Flupropanate, Flurenol, Fluridone, Flurochloridone, Fluroxypyr, Fomesafen, Fosamine, Fosametine, Flamprop-isopropyl, Flamprop-isopropyl-L, Flufenpyr, Flumiclorac-pentyl, Flumipropyn, Flumioxzim, Flurtamon, Flumioxzim, Flupyrsulfuron-methyl, Fluthiacet-methyl,
   Glyphosate, Glufosinate-ammonium
   Haloxyfop, Hexazinon,
   Imazamethabenz, Isoproturon, Isoxaben, Isoxapyrifop, Imazapyr, Imazaquin, Imazethapyr, Ioxynil, Isopropalin, Imazosulfuron, Imazomox, Isoxaflutole, Imazapic,
   Ketospiradox,
   Lactofen, Lenacil, Linuron,
   MCPA, MCPA-hydrazid, MCPA-thioethyl, MCPB, Mecoprop, Mecoprop-P, Mefenacet, Mefluidid, Mesosulfuron, Metam, Metamifop, Metamitron, Metazachlor, Methabenzthiazuron, Methazol, Methoroptryne, Methyldymron, Methylisothiocyanat, Metobromuron, Metoxuron, Metribuzin, Metsulfuron, Molinat, Monalid, Monolinuron, MSMA, Metolachlor, Metosulam, Metobenzuron,
   Naproanilid, Napropamid, Naptalam, Neburon, Nicosulfuron, Norflurazon, Natriumchlorat,
   Oxadiazon, Oxyfluorfen, Oxysulfuron, Orbencarb, Oryzalin, Oxadiargyl,
   Propyzamid, Prosulfocarb, Pyrazolate, Pyrazolsulfuron, Pyrazoxyfen, Pyribenzoxim, Pyributicarb, Pyridat, Paraquat, Pebulat, Pendimethalin, Pentachlorophenol, Pentoxazon, Pentanochlor, Petroleumöle, Phenmedipham, Picloram, Piperophos, Pretilachlor, Primisulfuron, Prodiamine, Profoxydim, Prometryn, Propachlor, Propanil, Propaquizafob, Propazine, Propham, Propisochlor, Pyriminobac-methyl, Pelargonsäure, Pyrithiobac, Pyraflufen-ethyl,
   Quinmerac, Quinocloamine, Quizalofop, Quizalofop-P, Quinchlorac,
   Rimsulfuron
   Sethoxydim, Sifuron, Simazine, Simetryn, Sulfosulfuron, Sulfometuron, Sulfentrazone, Sulcotrione, Sulfosate,
   Teeröle, TCA, TCA-Natrium, Tebutam, Tebuthiuron, Terbacil, Terbumeton, Terbutylazine, Terbutryn, Thiazafluoron, Thifensulfuron, Thiobencarb, Thiocarbazil, Tralkoxydim, Triallate, Triasulfuron, Tribenuron, Triclopyr, Tridiphane, Trietazine, Trifluralin, Tycor, Thdiazimin, Thiazopyr, Triflusulfuron, Vernolat.
   Die Erfindung betrifft weiterhin ein Polymer, enthaltend wenigstens eine Aziridin-Verbindung, wobei die bevorzugten Ausführungsformen für das Polymer, die Aziridinverbindung sowie Menge und Herstellung den oben angegebenen entsprechen. Bevorzugt ist dieses aziridinhaltige Polymer frei von iodhaltigen Verbindungen.

Die Erfindung betrifft weiterhin die Verwendung eines solchen erfindungsgemäßen Polymeren zur Stabilisierung von iodhaltigen Verbindungen, insbesondere den oben genannten. Weiterhin betrifft die Erfindung eine Zusammensetzung, enthaltend
a) wenigstens ein Polymer enthaltend wenigstens eine Aziridin-Verbindung und
b) wenigstens eine iodhaltige Verbindung.

Die Erfindung betrifft weiterhin die Verwendung der eingangs beschriebenen erfindungsgemäßen Polymeren als auch die erfindungsgemäße Zusammensetzung als stabile und stabilisierende Darreichungsform iodhaltiger Verbindungen, insbesondere Bioziden.

Die verwendungsgemäß einzusetzenden Polymeren bzw. die erfindungsgemäßen Polymerpräparation eignen sich bevorzugt zur Stabilisierung von iodhaltigen Verbindungen, insbesondere Bioziden in Bindemittelformulierungen bspw. in alkydharzbasierten Systemen wie Anstrichmitteln, die Übergangsmetalltrockner enthalten, insbesondere in Gegenwart von Übergangsmetalltrocknern. Bevorzugte Bindemittelformulierungen und Übergangsmetalltrockner werden weiter unten näher beschrieben.

Unter Stabilisierung wird im Rahmen dieser Anmeldung vorzugsweise die Stabilisierung von iodhaltigen Verbindungen sowohl vor chemischem als auch durch Licht induziertem Abbau, insbesondere vor chemischem Abbau verstanden.

Insbesondere können die erfindungsgemäßen Polymeren und die erfindungsgemäßen Zusammensetzungen dazu verwendet werden, den chemischen Abbau iodhaltiger Verbindungen, insbesondere Biozide in Wirkstoffformulierungen, insbesondere Anstrichmitteln wie Farben, Lacke, Grundierungen, Imprägnierungen, Lasuren und anderen technischen Materialien zu unterdrücken oder zumindest zu verlangsamen. Die erfindungsgemäß zur Stabilisierung iodhaltiger Verbindungen, insbesondere Biozide, einsetzbaren erfindungsgemäßen Zusammensetzungen weisen ganz besonders in Alkydharz-basierten Systemen wie Anstrichmitteln, die Übergangsmetalltrockner enthalten, eine gute stabilisierende Wirkung auf.

Die Erfindung betrifft weiterhin eine Bindemittelformulierung, enthaltend
- wenigstens ein Bindemittel,
- wenigstens ein erfindungsgemäßes Polymer und/oder
- wenigstens eine erfindungsgemäße Zusammensetzung.

Das erfindungsgemäße Polymer kann dabei bevorzugt auch in Form der erfindungsgemäßen Polymerpräparation eingesetzt werden.

Als bevorzugte Bindemittel kommen oxidativ trocknende Bindemittel, vorzugsweise alkydharzbasierende Bindemittel oder durch Koaleszenzmittel verfilmenden Bindemittel, insbesondere Latices in Frage.

Von den alkydharzbasierten Bindemitteln kommen vorzugsweise Alkydharze und modifizierte Alkydharze in Frage.

Bei den Alkydharzen handelt es sich im allgemeinen um Polykondensationsharze aus Polyolen und mehrwertigen Carbonsäuren bzw. deren Anhydriden und Fetten, Ölen oder freien natürlichen und/oder synthetischen Fettsäuren. Die Alkydharze können gegebenenfalls noch mit hydrophilen, insbesondere wasserlöslichen Gruppen chemisch modifiziert sein, um beispielsweise als emulgierbares bzw. als wasserlösliches Alkydharz einsetzbar zu sein.

Bevorzugt handelt es sich bei den genannten Polyolen um Glycerin, Pentaerythrit, Trimethylolethan, Trimethylolpropan sowie um verschiedene Diole wie Ethan-/Propandiol, Diethylenglycol und Neopentylglycol.

Bevorzugt handelt es sich bei den genannten mehrwertigen Carbonsäuren bzw. deren Anhydriden um Phthalsäure, Phthalsäureanhydrid, Maleinsäureanhydrid, Isophthalsäure, Terephthalsäure, Trimellitsäureanhydrid, Adipinsäure, Azelainsäure oder Sebacainsäure.

Bei den genannten Ölen oder Fettsäuren handelt es sich im allgemeinen um Leinöl, Oiticiaöl, Holzöl, Sojaöl, Sonnenblumenöl, Safloröl, Ricinenöl, Tallöl, Rizinusöl, Kokosöl, Erdnussöl, deren Fettsäuren sowie synthetische gesättigte, ungesättigte oder mehrfach ungesättigte Monocarbonsäuren bzw. Mischungen dieser Komponenten.

Die Alkydharze können gegebenenfalls noch modifiziert werden bspw. mit Naturharzen, Phenolharzen, Acrylharzen, Styrol, Epoxidharzen, Siliconharzen, Isocyanaten, Polyamiden oder Aluminiumalkoholaten.

Die Alkydharze haben im allgemeinen eine Molmasse von 500 bis 100000 g/mol, vorzugsweise von 1000 bis 50000 g/mol, insbesondere von 1500 bis 20000 g/mol (bestimmt durch LaserlichtStreuung, siehe bspw. "Static Light Scattering of Polystyrene Reference Materials: Round Robin Test", U.Just, B.Werthmann International Journal of Polymer Analysis and Characterization, 1999 Vol.5, Seiten 195 - 207).

Die erfindungsgemäßen Bindemittelformulierungen enthalten vorzugsweise 1 bis 80 Gew.-% bevorzugt 2 bis 70 Gew.-% und besonders bevorzugt 3 bis 60 Gew.-% an Alkydharz.

Bevorzugt enthält die erfindungsgemäße Bindemittelformulierung ein alkydharzbasiertes Bindemittel und zur oxidativen Trocknung ein Übergangsmetalltrockner. Unter Übergangsmetalltrockner werden im Rahmen dieser Anmeldung insbesondere Übergangsmetallverbindungen verstanden, die die Trocknung und Härtung des Alkydharz-basierten Bindemittels beschleunigen.

Bevorzugt sind die Salze von Übergangsmetallen der Gruppen Vb, VIb, VIIb, VIII und Ib des chemischen Periodensystems. Insbesondere handelt es sich um die Salze von Cobalt, Mangan, Vanadium, Nickel, Kupfer und Eisen, besonders bevorzugt um Cobalt, Mangan, Eisen und Vanadium. Sie müssen nicht unbedingt nur allein eingesetzt, sondern können auch in Kombination mit nicht Übergangsmetallsalzen, wie Beispielsweise Blei, Calcium oder Zirkonium zum Einsatz kommen.

Die bevorzugten Übergangsmetallsalze sind in organischen Lösungsmitteln, bspw. Testbenzin, bei 20 °C in einer Menge von mehr als 10 g/l löslich. Vorzugsweise handelt es sich um die Salze von Carbonsäuren, die eine gute Verträglichkeit mit den Alkydharz-Bindemitteln haben und gleichzeitig eine ausreichende Löslichkeit des Metallsalzes gewährleisten. Verwendet werden bevorzugt Übergangsmetallsalze von Fettsäuren wie Oleate oder Linoleate, Harzsäuren wie Resinate oder Salze der 2-Ethylhexansäure (Octoate). Bevorzugte Übergangsmetalltrockner sind Cobaltoctoat und Cobaltnaphthenat z.B. Octasoligen^{®}-Cobalt 12 der Firma Borchers.

Bevorzugt enthalten die erfindungsgemäßen Bindemittelformulierungen die Übergangsmetalltrockner in einer Menge von 0,001 bis 1 Gew.-%, bevorzugt 0,005 bis 0,5 Gew.-% und ganz besonders bevorzugt 0,01 bis 0,1 Gew.-%, jeweils bezogen auf Bindemittel.

Die Bindemittelformulierungen enthalten in einer bevorzugten Ausführungsform wenigstens ein polares organisches Lösungsmittel, vorzugsweise ein polares aprotisches Lösungsmittel. Als solche kommen beispielsweise polare protische wie Dipropylenglykol-monomethylether (z.B. Dowanol DPM der Fa. Dow Chemical) sowie vorzugsweise in Kombination dazu polare aprotische Lösungsmittel, wie Dimethylformamid und Dimethylsulfoxid, sowie z.B. veretherte Glykole, Oligoglykole und Polyglykole, veretherte Polyole und veresterte Polyole, Ester von ein- sowie mehrwertigen Carbonsäuren, z.B. Adipinsäuredüsobutylester, Maleinsäuredüsobutylester (z.B. Rhodiasolv DIB in Frage.

Besonders bevorzugt ist die Bindemittelformulierung, enthaltend
1 bis 80 Gew.-%, bevorzugt 2 bis 70 Gew.-%, besonders bevorzugt 3 bis 60 Gew.-% Alkydharzbinder
0 bis 50 Gew.-%, bevorzugt 0 bis 45 Gew.-%, besonders bevorzugt 0 bis 40 Gew.-%. Farbpigmente
0,01 bis 10 Gew.-%, bevorzugt 0,05 bis 5 Gew.-%, besonders bevorzugt 0,1 bis 4 Gew.-% erfindungsgemäßes Polymer oder erfindungsgemäße Zusammensetzung,
2 bis 97 Gew.-% Lösungsmittel, insbesondere unpolare oder polare Lösungsmittel, davon vorzugsweise bis zu 10 Gew.%, insbesondere 0,01 bis 7,5 Gew.-%, bezogen auf die Bindemittelpräparation an polaren aprotischen Lösungsmitteln, und
0,001 bis 3 Gew.-% eines Übergangsmetalltrockners.

Besonders bevorzugt sind erfindungsgemäße Bindemittelformulierungen, enthaltend wenigstens eine Alkydharz, wenigstens ein Übergangsmetalltrockner, wenigstens ein Lösungsmittel und wenigstens eine erfindungsgemäße Zusammensetzung oder erfindungsgemässe Formulierung.

Die Bindemittelformulierung kann darüber hinaus noch Füller, Hautverhinderungsmittel, Rheologieadditive wie beispielsweise Antiabsetzmittel und Thixotropiermittel, weitere Biozide wie Fungizide, Bakterizide, Antifoulingmittel und Algizide, Lösungsmittel, Prozessadditive, Weichmacher, UV- und Hitzestabilisatoren, sowie Korrosionsinhibitoren in üblichen Mengen enthalten.

Zusätzlich können den Bindemittelformulierungen noch weitere Stabilisatoren zugesetzt werden, wie beispielsweise die in WO 98/22543 genannten Chelatisierungsreagentien oder andere heterocyclische 3-Ringverbindungen, insbesondere solche mit einem anderen Heteroatom als das, was in der erfindungsgemässsen Zusammensetzung bzw. erfindungsgemässen Formulierung eingesetzt wurde. Im Fall von Aziridinen sind dies vorzugsweise die in WO 00/16628 genannten organischen Epoxide. In vielen Fällen werden hier synergistische Effekte beobachtet.

Darüber hinaus können bei der erfindungsgemäßen Verwendung auch noch ein oder mehrere Stabilisatoren aus der Reihe der Antioxidantien, Radikalfänger, UV-Stabilisatoren, Chelatoren und UV-Absorber zugesetzt werden, die teilweise synergistische Wirkungen aufweisen. Diese Stoffe können ggf. auch bereits bei der Herstellung des erfindungsgemäßen Polymers zum Einsatz kommen und im Polymer enthalten sein.

Beispielhaft seien als weitere UV-Stabilisatoren genannt:
sterisch gehinderten Phenole, wie
2,6-Di-tert.-butyl-4-methylphenol, 2-tert.-Butyl-4,6-dimethylphenol, 2,6-Di-cyclopentyl-4-methylphenol, 2-(α-Methylcyclohexyl)-4,6-dimethylphenol, 2,6-Di-octadecyl-4-methylphenol oder 2,6-Di-tert.-butyl-4-methoxymethylphenol, Diethyl-(3,5-di-tert-butyl-4-hydroxybenzyl)phosphonate, 2,4-Dimethyl-6-(1-methylpentadecyl)-phenol, 2-Methyl-4,6-Bis[(octylthio)methyl]phenol, 2,6-Di-tert.-butyl- 4-methoxyphenol, 2,5-Di-tert.-butyl-hydrochinon, 2,5-Di-tert.-amyl-hydrochinon, 2,6-Diphenyl-4-octadecyloxyphenol, 2,2'-Thio-bis-(6-tert.-butyl-4-methylphenol), 2,2'-Thio-bis-(4-octylphenol), 4,4'-Thio-bis-(6-tert.-butyl-3-methylphenol), 4,4'-Thio-bis-(6-tert.-butyl-2-methylphenol), 2,2'-Methylen-bis-(6-tert.-butyl-4-methylphenol), 2,2'-Methylen-bis-(4-methyl-6-cyclohexylphenol), 2,2'-Methylen-bis-(4,6-di-tert.-butylphenol), 2,2'-Ethyliden-bis-(4,6-di-tert.-butylphenol), 4,4'-Methylen-bis-(2,6-di-tert.-butylphenol), 4,4'-Methylen-bis-(6-tert.-butyl- 2-methylphenol), 1,1-Bis-(5-tert.-butyl-4-hydroxy-2-methylphenyl)-butan, 1,1,3-Tris-(5-tert.-butyl-4-hydroxy-2-methylphenyl)-butan, 1,3,5-Tri-(3,5-di-tert.-butyl-4-hydroxybenzyl)-2,4,6-trimethylbenzol, 3,5-Di-tert.-butyl-4-hydroxybenzyl- mercaptoessigsäure-isooctylester, 1,3,5-Tris-(3,5-di-tert.-butyl-4-hydroxybenzyl)-isocyanurat, 1,3,5-Tris-(4-tert.butyl-3-hydroxy-2,6-dimethylbenzyl)-isocyanurat, 1,3,5-Tris[(3,5-di-tert-butyl-4-hydroxyphenyl)propionyloxyethyl] isocyanurate, 3,5-Di-tert.-butyl-4-hydroxybenzyl-phosphonsäure-dioctadecylester, 3,5-Di-tert.-butyl-4-hydroxybenzyl-phosphonsäure-monoethylester-Calciunr-salz, N,N'-Di-(3,5-di-tert.-butyl-4-hydroxyphenylpropionyl)-hexamethylendiamin, N,N'-Di-(3,5-di-tert.-butyl-4-hydroxyphenylpropionyl)-trimethylendiamin, N,N'-Di-(3,5-di-tert-butyl-4-hydroxyphenyl-propionyl)-hydrazin, 3,9-Bis[1,1-dimethyl-2-[(3-tert-butyl-4-hydroxy-5-methylphenyl)propionyloxy]ethyl]-2,4,8,10-tetraoxaspiro[5.5]undecane, Bis[3,3-bis(4'-hydroxy-3'-tert-butylphenyl)butanoic acid] ethylene glycol ester, 2,6-bis[[3-(1,1-dimethylethyl)-2-hydroxy-5-methylphenyl]octahydro-4,7-methano-1H-indenyl]-4-methyl-phenol (= Wingstay L), 2,4-Bis(n-octylthio)-6-(3,5-di-tert-butyl-4-hydroxyphenylamino)-s-triazine, N-(4-Hydroxyphenyl)octadecanamide, 2,4-Di-tert-butylphenyl 3',5'-di-tert-butyl-4'-hydroxybenzoate, (Benzoic acid, 3,5-bis(1,1-dimethylethyl)-4-hydroxy-, hexadecyl ester), 3-Hydroxyphenyl benzoate, 2,2'-Methylenebis(6-tert-butyl-4-methylphenol) monoacrylate, 2-(1,1-dimethylethyl)-6-[1-[3-(1,1-dimethylethyl)-5-(1,1-dimethylpropyl)-2-hydroxyphenyl]ethyl]-4-(1,1-dimethylpropyl)phenyl ester, Ester der ß-(3,5-Di-tert.-butyl-4-hydroxyphenyl)-propionsäure mit ein- oder mehrwertigen Alkoholen wie z.B. mit Methanol, Octadecanol, 1,6-Hexandiol, Neopentylglycol, Thiodiethylenglycol, Diethylenglycol, Triethylenglycol, Pentaerythrit, Tris-hydroxyethylisocyanurat oder Di-hydroxyethyl-oxalsäurediamid,

Ester der ß-(5-tert--Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-hydroxyethylisocyanurat oder Di-hydroxyethyl-oxalsäurediamid.

Gehinderte Amine wie,

Bis(1,2,2,6,6-pentamethyl-4-piperidyl) 2-(3,5-di-tert-butyl-4-hydroxybenzyl)-2-butyl malonate, Bis(2,2,6,6-tetramethyl-4-piperidyl) decanedioate, Dimethyl succinate-1-(2-hydroxyethyl)-4-hydroxy-2,2,6,6-tetramethylpiperidine copolymer, Poly[[6-[(1,1,3,3-tetramethylbutyl)amino]-1,3,5-triazine-2,4-diyl] [(2,2,6,6-tetramethyl-4-piperidyl)imino]hexamethylene[(2,2,6,6-tetramethyl-4-piperidyl)imino]] (CAS-Nr 71878-19-8), 1,5,8,12-Tetrakis[4,6-bis(N-butyl-N-1,2,2,6,6-pentamethyl-4-piperidylamino)-1,3,5-triazin-2-yl]-1,5,8,12-tetraazadodecane (CAS-Nr. 106990-43-6), Bis(1,2,2,6,6-pentamethyl-4-piperidyl) decanedioate, Bis(1,2,2,6,6-pentamethyl-4-piperidyl) 2-(3,5-di-tert-butyl-4-hydroxybenzyl)-2-butyl malonate, Decanedioic acid, bis(2,2,6,6-tetramethyl-4-piperidinyl) ester, reaction products with tert-Bu hydroperoxide and octane (CAS-Nr 129757-67-1), Chimasorb 2020 (CAS-Nr 192268-64-7), Poly[[6-morpholino-1,3,5-triazine-2,4-diyl][(2,2,6,6-tetramethyl-4-piperidinyl)imino]-1,6-hexanediyl[(2,2,6,6-tetramethyl-4-piperidinyl)imino]], Poly[[6-(4-morpholinyl)-1,3,5-triazine-2,4-diyl][(1,2,2,6,6-pentamethyl-4-piperidinyl)imino]-1,6-hexanediyl[(1,2,2,6,6-pentamethyl-4-piperidinyl)imino]] (9CI), 3-Dodecyl-1-(2,2,6,6-tetramethyl-4-piperidyl)pyrrolidine-2,5-dione, 3-Dodecyl-1-(1,2,2,6,6-pentamethylpiperidin-4-yl)pyrrolidine-2,5-dione,,4-Octadecanoyloxy-2,2,6,6-tetramethylpiperidine, Poly[[6-(cyclohexylamino)-1,3,5-triazine-2,4-diyl][(2,2,6,6-tetramethyl-4-piperidinyl)imino]-1,6-hexanediyl[(2,2,6,6-tetramethyl-4-piperidinyl)imino]], 1H,4H,5H,8H-2,3a,4a,6,7a,8a-Hexaazacyclopenta[def]fluorene-4,8-dione, hexahydro-2,6-bis(2,2,6,6-tetramethyl-4-piperidinyl)- (CAS-Nr 109423-00-9), N,N'-Bis(formyl)-N,N'-bis(2,2,6,6-tetramethyl-4-piperidyl)-1,6-hexanediamine, N-(tetramethyl-4-piperidinyl)maleimide-C20-24-α-olefin copolymer (CAS-Nr 199237-39-3), Tetrakis(1,2,2,6,6-pentamethyl-4-piperidyl) 1,2,3,4-butanetetracarboxylate, Tetrakis(2,2,6,6-tetramethyl-4-piperidyl) 1,2,3,4-butanetetracarboxylate, 1,2,2,6,6-Pentamethyl-4-piperidinyl tridecyl 1,2,3,4-butanetetracarboxylate, (1,2,3,4-Butanetetracarboxylic acid, 2,2,6,6-tetramethyl-4-piperidinyl tridecyl ester), (2,4,8,10-Tetraoxaspiro[5.5]undecane-3,9-diethanol, β,β,β',β'-tetramethyl-, polymer with 1,2,3,4-butanetetracarboxylic acid) (CAS-Nr 115055-30-6), 2,2,4,4-Tetramethyl-21-oxo-7-oxa-3,20-diazadispiro[5.1.11.2]heneicosane, (7-Oxa-3,20-diazadispiro[5.1.11.2]heneicosane-20-propanoic acid, 2,2,4,4-tetramethyl-21-oxo-, tetradecyl ester), (7-Oxa-3,20-diazadispiro[5.1.11.2]-heneicosan-21-one, 2,2,4,4-tetramethyl-20-(oxiranylmethyl)-), (Propanamide, N-(2,2,6,6-tetramethyl-4-piperidinyl)-3-[(2,2,6,6-tetramethyl-4-piperidinyl)amino]-), (1,3-Propanediamine, N,N"-1,2-ethanediylbis-, polymer with 2,4,6-trichloro-1,3,5-triazine, reaction products with N-butyl-2,2,6,6-tetramethyl-4-piperidinamine) (CAS-Nr 136504-96-6), 1,1'-Ethylenebis(3,3,5,5-tetramethyl-2-piperazinone), (Piperazinone, 1,1',1"-[1,3,5-triazine-2,4,6-triyltris[(cyclohexylimino)-2,1-ethanediyl]]tris[3,3,5,5-tetramethyl-), (7-Oxa-3,20-diazadispiro[5.1.11.2]heneicosane-20-propanoic acid, 2,2,4,4-tetramethyl-21-oxo-, dodecyl ester), 1,1-Bis(1,2,2,6,6-pentamethyl-4-piperidyloxycarbonyl)-2-(4-methoxyphenyl)ethene, (2-Propenoic acid, 2-methyl-, methyl ester, polymer with 2,2,6,6-tetramethyl-4-piperidinyl 2-propenoate) (CAS-Nr 154636-12-1), (Propanamide, 2-methyl-N-(2,2,6,6-tetramethyl-4-piperidinyl)-2-[(2,2,6,6-tetramethyl-4-piperidinyl)amino]-), (D-Glucitol, 1,3:2,4-bis-O-(2,2,6,6-tetramethyl-4-piperidinylidene)-) (CA-Nr 99473-08-2), N,N'-Bis(2,2,6,6-tetramethyl-4-piperidinyl)isophthalamide, 4-Hydroxy2,2,6,6-tetramethylpiperidine, 1-Allyl-4-hydroxy-2,2,6,6-tetramethylpiperidine, 1-Benzyl-4-hydroxy-2,2,6,6-tetramethylpiperidine, 1-(4-tert.-Butyl-2-butenyl)-4-hydroxy-2,2,6,6-tetramethylpiperidine, 4-Stearoyloxy-2,2,6,6-tetramethylpiperidine, 1-Ethyl-4-salicyloyloxy-2,2,6,6-tetramethylpiperidine, 4-Methacryloyloxy-1,2,2,6,6-pentamethylpiperidine, 1,2,2,6,6-Pentamethylpiperidin-4-yl-β-(3,5-ditert.-butyl-4-hydroxyphenyl)-propionate, 1-B enzyl-2,2,6,6-tetramethyl-4-piperidinylmaleinate, (Di-2,2,6,6-tetramethylpiperidin-4-yl)-adipate, (Di-2,2,6,6-tetramethylpiperidin-4-yl)-sebacate, (Di-1,2,3,3,6-tetramethyl-2,6-diethyl-piperidin-4-yl)sebacate, (Di-1-allyl-2,2,6,6-tetramethyl-piperidin-4-yl)phthalate, 1-Propargyl4-β-cyanoethyl-oxy-2,2,6,6-tetramethylpiperidine, 1-Acetyl-2,2,6,6-tetramethylpiperidin-4-yl-acetate, (Trimellitic acid-tri-(2,2,6,6-tetramethylpiperidin-4-yl)ester), 1-Acryloyl-4-benzyloxy-2,2,6,6-tetramethylpiperidine, Dibutyl-malonic acid-di-(1,2,2,6,6-pentamethyl-piperidin-4-yl)ester, Butyl-(3,5-di-tert-butyl-4-hydroxybenzyl)-malonic acid-di-(1,2,2,6,6-pentamethylpiperidin-4-yl)ester, Dibenzyl- malonic acid-di-(1,2,2,6,6-pentamethylpiperidin-4-yl)ester, Dibenzyl-malonic acid-di-(1,2,3,6-tetramethyl-2,6-diethyl-piperidin-4-yl)ester, Hexane-1',6'-bis-(4-carbamoyloxy-1-n-butyl-2,2,6,6-tetramethylpiperidine), Toluene-2',4'-bis-(4-carbamoyloxy-1-n-propyl-2,2,6,6-tetramethylpiperidine), Dimethyl-bis-(2,2,6,6- tetramethyl-piperidine-4-oxy)silane, Phenyl-tris-(2,2,6,6-tetramethylpiperidine-4-oxy)silane, Tris-(1-propyl-2,2,6,6-tetramethylpiperidin-4-yl)phosphite, Tris-(1-propyl-2,2,6,6-tetramethylpiperidin-4-yl)phosphate, Phenyl-[bis-(1,2,2,6,6-pentamethylpiperidin-4-yl)phosphonate, Di(1,2,2,6,6-pentamethylpiperidin- 4-yl)sebacate, NN'-Bis-(2,2,6,6-tetramethylpiperidin-4-yl)hexamethylene- 1 ,6-diamine, NN'-Bis-(2,2,6,6-tetramethylpiperidin-4-yl)hexamethylene- 1,6-diacetamide, 1-Acetyl-4-(N-cyclohexylacetamido)-2,2,6,6-tetramethylpiperidine, 4-Benzylamino-2,2,6,6-tetramethylpiperidine, N,N'-Bis-(2,2,6,6-tetramethylpiperidin-4-yl)-N,N'-dibutyladipamide, N,N'-Bis-(2,2,6,6-tetramethylpiperidin-4-yl)-N,N'-dicyclohexyl-(2-hydroxypropylene), NN'-Bis-(2,2,6,6-tetramethylpiperidin- 4-yl)-p-xylylenediamine, 4-(Bis-2-hydroxyethyl)-amino-1,2,2,6,6-pentamethylpiperidine, 4-(3-Methyl-4-hydroxy-5-tert.-butyl-benzoicacidamido)-2,2,6,6-tetramethylpiperidine, 4-Methacrylamino-1,2,2,6,6-pentamethylpiperidine, 9-Aza-8,8,10,10-tetramethyl-1,5-dioxaspiro[5.5]undecane, 9-Aza-8,8,10,10-tetramethyl-3-ethyl-1,5-dioxaspiro[5.51undecane, 8-Aza-2,7,7,8,9,9-hexamethyl- 1,4-dioxaspiro[4.5]decane, 9-Aza-3-hydroxymethyl-3-ethyl-8,8,9,10,10-pentamethyl-1-5-dioxaspiro[5.5]undecane, 9-Aza-3-ethyl-3-acetoxymethyl- 9-acetyl-8,8,10,10-tetramethyl- 1,5-dioxaspiro[5.5]undecane, 2,2,6,6-Tetramethyl-piperidine-4-spiro-2'-(1',3'-dioxane)5'-spiro-5"-(1",3"-dioxane)-2"-spiro4"-(2"',2"',6"',6"'-tetrameth ylpiperidine),3-Benzyl-1,3,8-triaza-7,7,9,9-tetramethyl-spiro[4.5]decane-2,4-dione, 3-n-Octyl-1,3,8-triaza-7,7,9,9-tetramethyl-spiro[4.5]decane-2,4-dione, 3-Allyl-1,3,8-triaza-1,7,7,9,9-pentamethyl-spiro[4.5]decane-2,4.dione, 3-Glycidyl-1,3,8-triaza-7,7,8,9,9- pentamethyl-spiro(4.5]decane-2,4-dione, 2-Isopropyl-7,7,9,9-tetramethyl-1-oxa- 3,8-diaza-4-oxyspiro[4.5]decane, 2-Butyl-7,7,9,9-tetramethyl-1-oxa-3,8-diaza-4-oxyspiro[4.5]decane, 2-Isopropyl-7,7,9,9-tetramethyl-1-oxa-4,8-diaza-oxyspiro[4.5]decane, 2-Butyl-7,7,9,9-tetramethyl-1-oxa-4,8-diaza-3-oxyspiro[4.5]decane, Bis-[β-(2,2,6,6-tetramethylpiperidino)-ethyl]-sebacate, α-(2,2,6,6-tetramethylpiperidino)-acetic acid-n-octyl ester, 1,4-bis-(2,2,6,6-tetramethylpiperidino)- 2-butene, N-Hydroxymethyl-N'-2,2,6,6-tetramethylpiperidin-4-yl-urea, N-Methoxymethyl-N'-2,2,6,6-tetramethylpiperidin-4-yl-urea, N-Methoxymethyl-N'-n-dodecyl-N'-2,2,6,6-tetramethylpiperidin-4-yl-urea, O-(2,2,6,6-Tetramethylpiperidin-4-yl)-N-methoxymethyl-urethane.

Phosphite und Phosphonate wie,
Tri(nonylphenyl) phosphite, Tris(2,4-di-tert-butylphenyl) phosphite, Bis(2,4-di-tert-butylphenyl) pentaerythritol diphosphite, Bis(2,6-di-tert-butyl-4-methylphenyl)pentaerythritol diphosphite, 2,2'-Methylenebis(4,6-di-tert-butylphenyl) octyl phosphite, Tetrakis(2,4-di-tert-butylphenyl)[1,1'-biphenyl]-4,4'-diylbisphosphonite, 2,2'-Ethylidenebis(4,6-di-tert-butylphenyl) fluorophosphite, Dioctadecyl pentaerythritol diphosphonite, 2-[[2,4,8,10-Tetrakis(1,1-dimethylethyl)dibenzo[d,f]-[1,3,2]dioxaphosphepin-6-yl]oxy]-N,N-bis[2-[[2,4,8,10-tetrakis(1,1-dimethylethyl)dibenzo-[d,f][1,3,2]dioxaphosphepin-6-yl]oxy]ethyl]ethanamine (CAS-Nr. 80410-33-9), Bis(2,4-di-tert-butyl-6-methylphenyl) ethyl phosphite, 2,4,6-Tri-tert-butylphenyl- 2-butyl-2-ethyl-1,3-propanediol phosphite oder Bis(2,4-dicumylphenyl) pentaerythritol diphosphite,
Hydroxylamine wie,
N,N-Bis(2-carboxyethyl)hydroxylamin, N,N-Bis(benzylthiomethyl)hydroxylamin, N,N-Diethylhydroxylamin, usw.
Sekundare Arylamine wie,
N-(2-Naphthyl)-N-phenylamine, 2,2,4-Trimethyl-1,2-dihydroquinoline polymer (CAS-Nr: 26780-96-1), N-2-Propyl-N'-phenyl-p-phenylenediamine, N-(1-Naphthyl)-N-phenylamine, (Benzenamine, N-phenyl-, reaction products with 2,4,4-trimethylpentene) (CAS-Nr. 68411-46-1) oder 4-(1-Methyl-1-phenylethyl)-N-[4-(1-methyl-1-phenylethyl)phenyl]aniline.
Lactone und Benzofuranone wie,
Irganox HP 136 (CAS Nr. 181314-48-7)
Thioether und Thioester wie,
Distearyl-3,3-thiodipropionate, Dilauryl 3,3'-thiodipropionate, Ditetradecylthiodipropionate, Di-n-octadecyl disulfide.
UV-Absorber wie,
(Methanone, [methylenebis(hydroxymethoxyphenylene)]bis[phenyl-),(Methanone, [1,6-hexanediylbis[oxy(2-hydroxy-4,1-phenylene)]]bis[phenyl-), 2-Benzoyl-5-methoxyphenol, 2,4-Dihydroxybenzophenone**,** 2,2'-Dihydroxy-4-methoxybenzophenone, 2-Hydroxy-4-octyloxybenzophenone, 2-Hydroxy-4-dodecyloxybenzophenone, 2-(2-Hydroxy-4-hexyloxyphenyl)-4,6-diphenyl-1,3,5-**triazine**, 2 , 4-Bis(2,4-dimethylphenyl)-6-(2-hydroxy-4-octyloxyphenyl)-1,3,5-triazine, 2-Ethoxy-2'-ethyloxalic acid bisanilide, N-(5-tert-Butyl-2-ethoxyphenyl)-N'-(2-ethylphenyl)oxamide, Dimethyl (p-methoxybenzylidene)malonate, 2,2'-(1,4-Phenylene)bis[3,1-benzoxazin-4-**one**], N'-(4-Ethoxycarbonylphenyl)-N-methyl-N-phenylform-amidine, 4-Methoxycinnamic acid 2-ethylhexyl ester, 4-Methoxycinnamic acid isoamyl-ester, 2-Phenylbenzimidazole-5-sulfonsäure, 2-Cyano-3,3-diphenylacrylic acid 2-ethylhexyl ester, 2-Ethylhexyl salicylate oder 3-(4-Methylbenzylidene)bornan-2-one,
Chelatoren wie,
Ethylendiamintetraacetat (EDTA), Ethylendiamin,Acetylaceton, Nitrilotriessigsäure, Ethylenglycol-bis(β-aminoethyl ether)-N,N-tetraessigsäure, 2,2'-Bipyridine, 4,4'-Dimethyl-2,2'-bipyridin, 2,2',6',2"-Terpyridin, ,4,4'Diphenyl-2,2'-bipyridin, 2,2'-Bipyridin-3,3'-diol, 1,10-Phenanthroline, 4-Methyl-1,10-phenanthroline, 5-Methyl-1,10-phenanthroline, 4,7-Dimethyl-1,10-phenanthroline, 5,6-Dimethyl-1,10-phenanthroline, 3,4,7,8-Tetramethyl-1,10-phenanthroline, 4,7-Diphenyl-1,10-phenanthroline, 2,4,7,9-Tetramethyl-1,10-phenanthroline, N,N,N',N'-Tetramethylethylendiamin, 2-Hydroxychinolin, 8-Hydroxychinolin, 2-Hydroxy-4-methyl-chinaldin, 5-Chlor-8-hydroxychinolin, 5,7-Dichlor-8-hydroxychinolin, 2,4-Chinolindiol, 2-Chinolinthiol, 8-Chinolinthiol, 8-Aminochinolin, 2,2'-Bichinolin, 2-Chinoxalinol, 3-Methyl-2-chinoxalinol, 2,3-Dihydroxychinoxaline, 2-Mercaptopyridin, 2-Dimethylaminopyridin, 1,2-Bis(Di-methylphosphino)ethan, 1,2-Bis-(diphenylphosphino)ethan, 1,3-bis(diphenylphosphino)propane, 1,4-Bis(diphenylphosphino)butan, Polyasparaginsäure oder Iminodisuccinat.

Iodhaltige Verbindungen, insbesondere Biozide werden vor allem in Gegenwart der oben näher beschriebenen Trockner abgebaut. Obwohl die stärksten Effekte in Gegenwart dieser Trockner beobachtet werden, haben auch eine Reihe von weiteren Farbkomponenten einen destabilisierenden Effekt auf iodhaltige Verbindungen, insbesondere Biozide. Zu nennen sind hier anorganische und organische Pigmente, Füller, Hautverhinderungsmittel, Rheologieadditive wie beispielsweise Antiabsetzmittel und Thixotropiermittel, weitere Verbindungen, insbesondere Biozide wie Fungizide, Bakterizide, Antifoulingmittel und Algizide, Lösungsmittel, Prozessadditive, Weichmacher, UV- und Hitzestabilisatoren, Korrosionsinhibitoren usw. Die erfindungsgemäßen Zusammensetzungen/Formulierungen zeigen auch hier einen stark stabilisierenden Effekt.

Die erfindungsgemäßen Zusammensetzungen/Formulierungen eingesetzt in oxidativ trocknenden Bindemittelpräparationen, bzw. die erfindungsgemäßen Bindemittelpräparationen selbst zeigen eine gegenüber unstabilisierten iodhaltigen Systemen, insbesondere IPBC-haltigen Systemen eine deutliche Reduzierung der Trockenzeit bzw. keine Verlängerung der Trockenzeit im Vergleich zu den nicht mit IPBC ausgerüsteten Systemen (sogenannte Blank-Formulierungen).

Bevorzugt werden die erfindungsgemäßen Bindemittelformulierungen als Anstrichmittel, insbesondere als Farben, Lacke, Grundierungen, Imprägnierungen und Lasuren eingesetzt. Entsprechend betrifft die Erfindung auch die Verwendung der erfindungsgemäßen Bindemittelformulierungen als Anstrichmittel.

Die Erfindung betrifft weiterhin die Verwendung der erfindungsgemäßen Polymeren oder der erfindungsgemäßen Zusammensetzung zum Schutz von technischen Materialien gegen Zerstörung oder Befall durch Mikroorganismen.

Die erfindungsgemäßen Polymeren bspw. in Form ihrer Polymerpräparationen eignen sich zum Schutz von technischen Materialien. Unter technischen Materialien sind im vorliegenden Zusammenhang nicht-lebende Materialien zu verstehen, die für die Verwendung in der Technik zubereitet worden sind. Beispielsweise handelt es sich bei den technischen Materialien um Klebstoffe, Leime, Papier und Karton, Textilien, Leder, Holz, Holzwerkstoffe, Anstrichmittel und Kunststoffartikel, Kühlschmierstoffe und andere Materialien, die von Mikroorganismen befallen oder zersetzt werden können.

Als Mikroorganismen, die einen Abbau oder eine Veränderung der technischen Materialien bewirken können, seien beispielsweise Bakterien, Pilze, Hefen, Algen und Schleimorganismen genannt. Vorzugsweise wirken die erfindungsgemäßen Wirkstoffe gegen Pilze, insbesondere Schimmelpilze, holzverfärbende und holzzerstörende Pilze (Basidiomyceten) sowie gegen Schleimorganismen und Bakterien.

Es seien beispielsweise Mikroorganismen der folgenden Gattung genannt:
Alternaria, wie Alternaria tenuis,
Aspergillus, wie Aspergillus niger,
Chaetomium, wie Chaetomium globosum,
Coniophora, wie Coniophora puetana,
Lentinus, wie Lentinus tigrinus,
Penicillium, wie Penicillium glaucum,
Polyporus, wie Polyporus versicolor,
Aureobasidium, wie Aureobasidium pullulans,
Sclerophoma, wie Sclerophoma pityophila,
Trichoderma, wie Trichoderma viride,
Escherichia, wie Escherichia coli,
Pseudomonas, wie Pseudomonas aeruginosa,
Staphylococcus, wie Staphylococcus aureus.

Die Erfindung betrifft weiterhin technische Materialien, enthaltend wenigstens das erfindungsgemäße Polymer oder eine erfindungsgemäße Zusammensetzung.

### Beispiele:

In den folgenden Beispielen werden durch Lagerung bei erhöhter Temperatur beschleunigte Stabilitätstests durchgeführt. Die Gehaltsbestimmung des IPBC erfolgte in allen Fällen per HPLC.

### Beispiele 1-2

In den Beispielen 1-2 wird die Herstellung erfindungsgemäßer Zusammensetzungen beschrieben.

### Beispiel 1 Emulgatorfreie Emulsionspolymerisation (IPBC:Aziridin = 4:1)

Monomerlösung I: Es wurden 40,0g IPBC und 10g Crosslinker CX-100 der Fa. DSM (Trimethylolpropan-tris[3-(2-methyl-1-aziridinyl)propionat] in einer Mischung bestehend aus 74,85g Methylmethacrylat, 13,2g Stearylmethacrylat und 59g Divinylbenzol gelöst.

In einer Polymerisationsapparatur wurden zu einer Lösung von 2,63g Natrium 4-Vinylbenzolsulfonat und 2,43g Natriumperoxodisulfat unter Rühren 6g der Monomerenlösung I gegeben, auf 70°C aufgeheizt und 30 Minuten gerührt. Anschließend wurde der Rest der Monomerenlösung I innerhalb von 5 Stunden zugetropft und nach beendeter Zugabe über Nacht bei 70°C nachgerührt. Nach dem Abkühlen wurde die erhaltene Dispersion durch eine Perlmühle gefahren und aus dem so gewonnenen Latex die Polymerphase durch Sprühtrocknung isoliert (Büchi B-290 Sprühtrockner, Pumpenleistung 45%, N₂-Fluß 35 1*min⁻¹, Inlet 160°C, Outlet 73°C). Es wurden 171,4g eines feinen Pulvers (entsprechend 87% d.Th.) mit einem IPBC-Gehalt von 18,1% erhalten.

### Beispiel 2: Miniemulsionspolymerisation (IPBC:Aziridin = 3:1)

Ölphase I: 60g IPBC wurden in einer Mischung enthalten 37,4g Methylmethacrylat, 6,6g Stearylmethacrylat und 29,5g Divinylbenzol gelöst.

Emulsion I: Eine Lösung von 7,4g Tanemul^{®} 508 (nichtionischer ethoxylierter Stearylalkohol Emulgator der Fa. Tanatex,) und 1,32g Natrium 4-Vinylbenzolsulfonat in 650ml Wasser wurde mit der Ölphase I unter Verwendung eines Ultraturrax (24.000 Umin⁻¹, 10 Minuten) in eine Emulsion überführt.

Polymerlatex I: In einer Polymerisationsapparatur wurde zu einer Lösung von 0,12g Natriumperoxodisulfat in 20ml Wasser die Emulsion I gegeben, unter Rühren auf 70°C erwärmt und dann 20 Minuten gerührt. Anschließend wurde eine Lösung von 1,1g Natriumperoxodisulfat in 20ml Wasser zugesetzt, weitere 2,5 Stunden gerührt, dann innerhalb von 2 Stunden eine Lösung von 1,2g Natriumperoxodisulfat in 10ml Wasser zudosiert, anschließend noch 3 Stunden nachgerührt und dann auf Raumtemperatur abgekühlt.

Emulsion II: Eine Lösung enthaltend 20g Crosslinker CX-100 der Fa. DSM (Trimethylolpropantris[3-(2-methyl-1-aziridinyl)propionat] sowie 10,7g Rhodiasolv^{®} DIB (Ölphase) wurde mit einer Lösung von 1,53g Tanemul® KS ( ethoxyliertes Rizinusöl) in 53,3g Wasser mit Hilfe eines Ultraturrax (24.000 Umin⁻¹, 5 Minuten) in eine Emulsion überführt.

Die Emulsion II wurde mit dem Polymerlatex I unter Flügelblattrührung gemischt (10 Minuten), die erhaltene Suspoemulsion durch eine Perlmühle gefahren und aus dem so gewonnenen Latex die Polymerphase durch Sprühtrocknung isoliert (Büchi B-290 Sprühtrockner, Pumpenleistung 55%, N₂-Fluß 35 1*min⁻¹ Inlet 160°C, Outlet 50°C). Es wurde nur der Feinanteil isoliert und so 114,3g eines feinen Pulvers (entsprechend 70% d.Th.) mit einem IPBC-Gehalt von 27,4% erhalten.

### Beispiel 3 Verwendung eines erfindungsgemäßen Polymers in Bindemittelformulierungen Das IPBC- und Aziridin- enthaltende Polymer aus Beispiel 2 (Verhältnis IPBC:Aziridin = 3:1) wurde in einem typischen, Alkyd-basierten Anstrichsystem (Alkydlasur A) in Gegenwart eines Übergangsmetalltrockners (Co) und eines Metalloxidpigmentes (Eisenoxid) eingebracht. Zur Ausrüstung des Anstrichsystems wurden das vorgenannte Polymer, ein IPBC-Konzentrat enthaltend IPBC und ein Aziridin im Verhältnis 2:1 (siehe Tabelle 1, Referenz II) sowie IPBC (neat) als Referenz I jeweils verwendet.

| Tabelle 1 - IPBC/Aziridin-Konzentrat (Referenz II) | |
|---|---|
| IPBC | 30 Gew.-% |
| Crosslinker CX-100** | 15 Gew.-% |
| Rhodiasolv DIB^{*} | 55 Gew.-% |

| | |
|---|---|
| ^{*}Gemisch bestehend aus Diisobutyladipat, Diisobutylglutarat, Diisobutylsuccinat, Fa. Rhodia. ^{**}Trimethylolpropan-tris[3-(2-methyl-1-aziridinyl)propionat] | |

Die Rezeptur der verwendeten Alkydlasur A ist in der Tabelle 2 dargestellt.

Zur Bestimmung der Stabilisierung wird ein beschleunigter Alterungstest durchgeführt. Hierzu wird das ausgerüstete Farbsystem in dicht schließende 200ml-Glasflaschen gefüllt, wobei nur eine minimale Restmenge Luft in dem Gebinde verbleibt, und bei 40°C gelagert. Die Ergebnisse sind der Tabelle 3 zu entnehmen.

| | **Inhaltsstoffe** | **Inhaltsstoffe der Alkydlasur A-I [%]** | **Inhaltsstoffe der Alkydlasur A-II[%]** **(Referenz I)** | **Inhaltsstoffe der Alkydlasur A-III [%]** **(Referenz II)** |
|---|---|---|---|---|
| Alkydlasur A | Vialkyd VAF 4349, 80 SD 60, Fa. Cytec | 22,5 | 22,5 | 22,5 |
| | Polares Lösungsmittel Texanol, Fa. Eastman | 5,0 | 5,0 | 5,0 |
| | RheologieadditivBYK E411, Fa. BYK | 0,4 | 0,4 | 0,4 |
| | Shellsol D60, Fa. Shell Chemicals | 65,24 | 67,1 | 65,47 |
| | MK-Solcolor Eisenoxidrot 130M (Pigmentpräparation), Fa. MK Chemicals | 4,0 | 4,0 | 4,0 |
| | Octa-Soligen^{®} 69 (enthält 6% Co), Fa. Borchers | 0,3 | 0,3 | 0,3 |
| | IPBC-Zusammensetzung aus Bsp. 2 | 2,56¹⁾ | - | - |
| | IPBC | - | 0,7 | - |
| | IPBC/Aziridin-Konzentrat (Referenz II) | - | - | 2,33¹⁾ |

| | | | | |
|---|---|---|---|---|
| ¹⁾ entspricht jeweils 0,7 Gew.-% IPBC, bezogen auf die Lasur. | | | | |

Aus Tabelle 3 wird deutlich, dass das mit einer 3-Ringverbindung und IPBC ausgerüstete Polymer im Hinblick auf die Stabilisierung von IPBC (siehe Lasur A-I) eine deutlich höhere Stabilität gegenüber der unstabilisierten Probe A-II aufweist. Auch gegenüber der lediglich mit Aziridin stabilisierten IPBC-Probe ohne Nutzung der Polymermatrixverkapselung (Lasur A-III) zeigt sich noch eine deutliche Verbesserung, obwohl die Lasur A-III ein größeres Aziridin/IPBC-Verhältnis aufweist (1/2 vs. 1/3).

| **Tabelle 3 - Stabilität des IPBC in den Alkydlasuren A (-I) bis (-IV) bei 40°C** | | | | |
|---|---|---|---|---|
| | **Restgehalt IPBC [%] bezogen auf den Startwert** | | | |
| Alkydlasur | Start | 2 Wochen | 4 Wochen | 8 Wochen |
| A-I | 100 | 100 | 100 | 94 |
| A-II¹⁾ | 100 | 96 | 52 | 0 |
| A-III²⁾ | 100 | 100 | 80 | 0 |

| | | | | |
|---|---|---|---|---|
| ¹⁾ nicht stabilisierte Probe ²⁾ Aziridin stab. IPBC, ohne Polymermatrix | | | | |

### Beispiel 4 Verwendung eines erfindungsgemäßen Polymers in Bindemittelformulierungen

Die IPBC-Zusammensetzung aus den Beispielen 1 und 2 wurden in einer handelsüblichen Holz-Dickschichtlasur "Alkydlasur B" (enthaltend Alkydharz, Testbenzin, Eisenoxidpigment, Trockner, Butanonoxim, UV-Absorber und Additive) eingebracht. Zur Ausrüstung des Anstrichsystems mit jeweils 0,7% IPBC, bezogen auf die Lasur, werden jeweils die Zusammensetzungen der Beispiele 1, 2 sowie unstabilisiertes IPBC eingesetzt (siehe Tabelle 4):

| **Tabelle 4** | | | |
|---|---|---|---|
| **Alkydlasur B - I** | | **Alkydlasur B - II** | |
| IPBC Zusammensetzung aus Bsp. 1 | 3,87 Gew.-%¹⁾ | IPBC Zusammensetzung aus Bsp. 2 | 2,56 Gew.-%¹⁾ |
| Alkydlasur B | 96,13 Gew.-% | Alkydlasur B | 97,44 Gew.-% |
| | | | |
| | | | |

| **Alkydlasur B - III** | | | |
|---|---|---|---|
| IPBC | 0,7 Gew.-% | | |
| unstabilisiert. | | | |
| Alkydlasur B | 99,3 Gew.-% | | |
| | | | |

| | | | |
|---|---|---|---|
| ¹⁾ entspricht jeweils 0,7 Gew.- IPBC bezogen auf Lasur | | | |

Die zu untersuchenden, mit jeweils 0.7% IPBC ausgerüsteten Dickschichtlasuren (Alkydlasur B-I bis Alkydlasur B-III) wurden durch Mischen der in der Tabelle 4 angegebenen Gewichtsanteile der Alkydlasur B sowie der genannten IPBC-haltigen Zusammensetzungen hergestellt.

Zur Bestimmung der Stabilisierung wird ein beschleunigter Alterungstest durchgeführt. Hierzu wird das ausgerüstete Farbsystem in dicht schließende 200 ml-Glasflaschen gefüllt, wobei nur eine minimale Restmenge Luft in dem Gebinde verbleibt, und bei 40°C gelagert. Die Ergebnisse sind der Tabelle 5 zu entnehmen, wonach nur die mit den erfindungsgemäß ausgerüsteten Alkydlasuren B-I und B-II im Vergleich zu der unstabilisierten Probe nach 4 Wochen Lagerung bei 40°C keinen signifikanten Abbau des IPBC zeigen. Insbesondere die Alkydlasur B-II zeigt auch nach 8 Wochen Lagerung bei 40°C nur einen leichten IPBC-Abbau.

| **Tabelle 5 - Stabilität des IPBC in den Alkydlasur B (-I) bis (-III) bei 40°C** | | | | |
|---|---|---|---|---|
| | **Restgehalt IPBC [%] bezogen auf den Startwert** | | | |
| Alkydlasur B | Start | 2 Wochen | 4 Wochen | 8 Wochen |
| -I | 100 | 100 | 86 | 40 |
| -II | 100 | 100 | 100 | 87 |
| -III¹⁾ | 100 | 33 | 0 | 0 |

| | | | | |
|---|---|---|---|---|
| ¹⁾ nicht stabilisierte Probe | | | | |

## Patentansprüche

1. Polymer, enthaltend wenigstens eine heterocyclische 3-Ring-Verbindung und eine jodhaltige Verbindung.

2. Polymer gemäß Anspruch 1, **dadurch gekennzeichnet, dass** die heterocyclische 3-Ring-Verbindung ein Epoxid oder ein Aziridin, insbesondere ein Aziridin ist.

3. Polymer gemäß Anspruch 1, **dadurch gekennzeichnet, dass** das Polymer ein natürliches, halbsynthetisches und/oder synthetisches Polymer ist.

4. Polymer gemäß Anspruch 1, **dadurch gekennzeichnet, dass** das Polymer partikulär ist, insbesondere eine mittlere Teilchengröße von kleiner 15µm, insbesondere kleiner 10µm und besonders bevorzugt kleiner 6µm hat.

5. Polymer gemäß Anspruch 1, **dadurch gekennzeichnet, dass** Polymer aus ethylenisch ungesättigten Monomeren M aufgebaut ist, umfassend:
- wenigstens 30 Gew.-%, insbesondere wenigstens 40 Gew.-%, besonders bevorzugt wenigstens 50 Gew.-%, bezogen auf die Gesamtmenge der Monomere M, wenigstens eines neutralen, monoethylenisch ungesättigten Monomeren M¹ mit einer Wasserlöslichkeit von nicht mehr als 50 g/l bei 25 °C, vorzugsweise nicht mehr als 30 g/l bei 25 °C,
- bis zu 60 Gew.-%, insbesondere von 0,01 bis 50 Gew.-%, bezogen auf die Gesamtmenge der Monomere M, eines oder mehrerer von den Monomeren M¹ verschiedener mehrfach ethylenisch ungesättigter Monomere M² und
- bis zu 40 Gew.-%, insbesondere bis zu 0,01 bis 40 Gew.-%, bezogen auf die Gesamtmenge der Monomere M, eines oder mehrerer von den Monomeren M¹ und M² verschiedener Monomere M³, die ladungstragend oder, potentiell ladungstragend sind oder neutral und vorzugsweise nicht potentiell ladungstragend sind, mit einer Wasserlöslichkeit von mehr als 50 g/l bei 25 °C.

6. Polymer gemäß Anspruch 1, **dadurch gekennzeichnet, dass** die heterocyclische 3-Ring-Verbindung ein Azirindin der Formel I 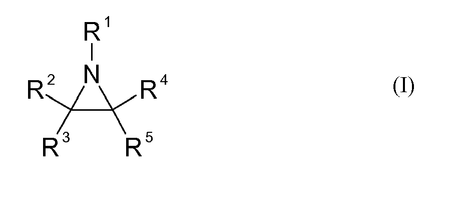 wobei
R¹ Wasserstoff, Alkyl oder Cycloalkyl, die jeweils unsubstituiert oder substituiert
und/oder einfach- oder mehrfach ethylenisch ungesättigt sind, jeweils substituiertes oder unsubstituiertes Fullerenyl, Aryl, Alkoxy, Alkoxycarbonyl, Arylcarbonyl, Alkanoyl, Carbamoyl oder Oxomethylen bedeutet,
R², R³, R⁴ und R⁵ unabhängig voneinander die gleiche Bedeutung wie R¹ haben und
zusätzlich unabhängig Halogen, Hydroxyl, Carboxyl, Alkylsulfonyl, Arylsulfonyl, Nitril, Isonitril bedeuten oder die Reste
R² und R⁴ oder R³ und R⁵ gemeinsam mit den Kohlenstoffatomen, an die sie gebunden
sind, einen 5- bis 10 gliedrigen carbocyclischen Ring bilden, der unsubstituiert oder substituiert und/oder einfach- oder mehrfach ethylenisch ungesättigt ist.

7. Polymer gemäß Anspruch 1, enthaltend als iodhaltige Verbindung wenigstens Diiodmethyl-p-tolylsulfon, Diiodmethyl-p-chlorphenylsulfon, 3-Brom-2,3-diiod-2-propenylalkohol, 2,3,3-Triiodallylalkohol, 4-Chlor-2-(2-chlor-2-methylpropyl)-5-[(6-iod-3-pyridinyl)methoxy]-3(2H)- pyridazinone (CAS-RN: 120955-77-3)Iodfenfos, 3-Iod-2-propinyl-2,4,5-trichlorphenylether, 3-Iod-2-propinyl-4-chlorphenylformal (IPCF), N-lodpropargyloxycarbonyl-alanin, N-Iodpropargyloxycarbonyl-alanin-ethylester, 3-(3-Iodpropargyl)-benzoxazol-2-on, 3-(3-Iodpropargyl)-6-chlorbenzoxazol-2-o n, 3-Iod-2-propinyl-alkohol, 4-Chlorphenyl-3-iodpropargylformal,3-Iod-2-propinyl-propyl-carbamat, 3-Iod-2-propinyl-butyl-carbamat (IPBC), 3-Iod-2-propinyl-m-chlorphenyl-carbamat, 3-Iod-2-propinyl-phenyl-carbamat, Di-(3-Iod-2-propinyl)hexyl-dicarbamat, 3-Iod-2-propinyloxyethanol-ethylcarbamat, 3-Iod-2-propinyl-oxyethanol-phenyl-carbamat, 3-Iod-2-propinyl-thioxo-thioethylcarbamat, 3-Iod-2-propinyl-carbaminsäureester (IPC), 3-Brom-2,3-diiod-2-propenylethylcarbamat, 3-Iod-2-propinyl-n-hexylcarbamat oder 3-Iod-2-propinyl-cyclohexylcarbamat.

8. Polymer gemäß Anspruch 1, enthaltend als iodhaltige Verbindung wenigstens IPBC.

9. Verfahren zur Herstellung von Polymeren gemäß Anspruch 1, **dadurch gekennzeichnet, dass** man
a) wenigstens eine jodhaltige Verbindung, wenigstens eine heterocyclische 3-Ring-Verbindung und ein Polymer in Gegenwart wenigstens eines Lösungsmittel mischt und anschließend das Lösungsmittel entfernt, oder
b) wenigstens ein Polymer, vorzugsweise ein thermoplastisches Polymer, wenigstens eine jodhaltige Verbindung und wenigstens eine heterocyclische 3-Ringverbindung ggf. unter Verwendung weiterer Hilfsstoffe extrudiert, oder
c) eine wässrige Dispersion eines vorzugsweise feinverteilten Polymers in Gegenwart einer O/W-Emulsion, enthaltend wenigstens eine iodhaltige Verbindung, wenigstens eine heterocyclische 3-Ring-Verbindung, Wasser und organisches Lösungsmittel schert, vorzugsweise mittels eines Flügelblattrührers oder einer Perlmühle, oder
d) eine wässrige Dispersion eines vorzugsweise feinverteilten Polymers, enthaltend wenigstens eine iodhaltige Verbindung, in Gegenwart einer O/W-Emulsion, enthaltend wenigstens eine heterocyclische 3-Ring-Verbindung, Wasser und organisches Lösungsmittel schert, vorzugsweise mittels eines Flügelblattrührers oder einer Perlmühle, oder
e) eine wässrige Dispersion eines vorzugsweise feinverteilten Polymers, enthaltend wenigstens eine heterocyclische 3-Ring-Verbindung, in Gegenwart einer O/W-Emulsion, enthaltend wenigstens eine iodhaltige Verbindung, Wasser und organisches Lösungsmittel schert, vorzugsweise mittels eines Flügelblattrührers oder einer Perlmühle, oder
f) das Polymer in Gegenwart wenigstens einer iodhaltigen Verbindung und wenigstens einer heterocyclischen 3-Ring-Verbindung herstellt, vorzugsweise durch Emulsionspolymerisation ethylenisch ungesättigter Monomere.

10. Polymerpräparation, enthaltend wenigstens ein Polymer gemäß Anspruch 1 und wenigstens einen Hilfsstoff.

11. Polymer, enthaltend wenigstens eine Aziridin-Verbindung.

12. Verwendung von Polymeren gemäß Anspruch 11 zur Stabilisierung von iodhaltigen Verbindungen.

13. Zusammensetzung, enthaltend
a) wenigstens ein Polymer gemäß Anspruch 11 und
b) wenigstens eine iodhaltige Verbindung.

14. Bindemittelformulierung, enthaltend
- wenigstens ein Bindemittel
- wenigstens ein Polymer nach Anspruch 7 oder
- wenigstens eine iodhaltige Verbindung und wenigstens ein Polymer gemäß Anspruch 11.

15. Bindemittelformulierung nach Anspruch 14, enthaltend wenigstens ein oxidativ trocknendes Bindemittel.

16. Bindemittelformulierung nach Anspruch 14, enthaltend wenigstens ein Übergangsmetalltrockner.

17. Bindemittelformulierung nach Anspruch 11, enthaltend
1 bis 80 Gew.-% Alkydharzbinder,
0 bis 50 Gew.-% Farbpigmente,
2 bis 97 Gew.-% Lösungsmittel,
0,001 bis 3 Gew.-% eines Übergangsmetalltrockners,
0,01 bis 5 Gew.-% eines Polymeren gemäß Anspruch 1 oder
0,001 bis 5 Gew,-% einer iodhaltigen Verbindung und 0,001 bis 5 Gew.-% eines Polymeren gemäß Anspruch 11.

18. Verwendung der Zusammensetzung nach Anspruch 1 oder 13 zum Schutz von technischen Materialien gegen Zerstörung oder Befall durch Mikroorganismen.

19. Technische Materialien, enthaltend wenigstens ein Polymer gemäß Anspruch 1 oder eine Zusammensetzung gemäß Anspruch 13.
